(19) Europäisches Patentamt
European Patent Office
Office européen des brevets

(11) EP 4 741 436 A1

(12) EUROPEAN PATENT APPLICATION
published in accordance with Art. 153(4) EPC

(43) Date of publication:
**13.05.2026 Bulletin 2026/20**

(21) Application number: **24856488.2**

(22) Date of filing: **21.08.2024**

(51) International Patent Classification (IPC):
***C08G 18/16*** *(2006.01)* ***C08G 18/10*** *(2006.01)*
***C08G 18/38*** *(2006.01)* ***C08G 18/73*** *(2006.01)*
***C08G 18/75*** *(2006.01)* ***C08G 18/76*** *(2006.01)*
***G02B 1/04*** *(2006.01)*

(52) Cooperative Patent Classification (CPC):
**C08G 18/10; C08G 18/16; C08G 18/38; C08G 18/73; C08G 18/75; C08G 18/76; G02B 1/04**

(86) International application number:
**PCT/JP2024/029690**

(87) International publication number:
**WO 2025/041800 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 JP 2023135607**
**23.08.2023 JP 2023135613**

(71) Applicant: **Mitsui Chemicals, Inc.**
**Tokyo 104-0028 (JP)**

(72) Inventors:
- **MATSUI, Yusuke**
  **Omuta-shi, Fukuoka 836-8610 (JP)**
- **ITO, Shinsuke**
  **Omuta-shi, Fukuoka 836-8610 (JP)**

(74) Representative: **Hoffmann Eitle**
**Patent- und Rechtsanwälte PartmbB**
**Arabellastraße 30**
**81925 München (DE)**

# (54) POLYMERIZABLE COMPOSITION FOR OPTICAL MATERIAL, POLYMERIZABLE PREPOLYMER COMPOSITION FOR OPTICAL MATERIAL, CURED ARTICLE, AND METHOD FOR PRODUCING OPTICAL MATERIAL

(57) The polymerizable composition for an optical material of the present disclosure includes two or more different monomers for an optical material, at least one of which is an isocyanate compound, a basic polymerization catalyst, and an organic acid having a pKa value of less than 4, and has a viscosity of from 10 mPa·s to 1000 mPa·s as measured at 25°C and 60 rpm using a B-type viscometer.

EP 4 741 436 A1

## Description

[Technical Field]

The present invention relates to a polymerizable composition for an optical material, a polymerizable prepolymer composition for an optical material, a cured article, and a method for producing an optical material.

[Background Art]

As a method for producing a resin used as an optical material for plastic lenses, a cast polymerization method may be employed, in which a polymerizable composition containing a monomer is poured into a mold and cured by heating.
In the cast polymerization method, a polymerizable composition is prepared and degassed, the polymerizable composition is then poured into a mold, and after heat curing (a polymerization reaction), the resulting product is removed from the mold (demolding) and subjected to annealing, thereby obtaining an optical material (for example, a lens or a semi-finished blank).
In the cast polymerization method, in order to improve the quality of the optical material, it is common to carry out the polymerization reaction over a long period of time (for example, about 20 to 48 hours) while gradually increasing the temperature of the polymerizable composition by heating. For this reason, it is known that a large proportion (for example, about 90%) of the total time required for manufacturing the optical material is consumed by the heat polymerization process.
In the examples of Patent Document 1, a process is described in which a mold into which a polymerizable composition had been poured was gradually heated from 10°C to 120°C, and polymerization was effected over 20 hours to obtain a molded article.
In the examples of Patent Document 2, a process is described in which a mold into which a polymerizable composition had been poured was gradually heated from 25°C to 120°C over 16 hours, and then heated at 120°C for 4 hours to obtain a molded article.

[Prior Art Document]

[Patent Document]

Patent Document 1: International Publication No. WO 2014/027427
Patent Document 2: International Publication No. WO 2014/133111

[Summary of the Invention]

[Problem to be Solved by the Invention]

The polymerizable compositions used in the methods described in Patent Document 1 and Patent Document 2 exhibit a rapid increase in viscosity after preparation and, therefore, still have room for improvement in terms of pot life (usable time).
One object to be achieved by an embodiment of the present disclosure is to provide a polymerizable composition and a polymerizable prepolymer composition that enable a reduction in the manufacturing time of optical materials and that exhibit excellent pot life.
Another object to be achieved by an embodiment of the present disclosure is to provide a method for producing an optical material using the foregoing polymerizable composition or polymerizable prepolymer composition, and a cured product obtained by using the foregoing polymerizable composition or polymerizable prepolymer composition.

[Means for Solving the Invention]

<1> A polymerizable composition for an optical material, the composition including two or more different monomers for an optical material, a basic polymerization catalyst, and an organic acid having a pKa value of less than 4, at least one of the two or more different monomers for an optical material being an isocyanate compound, and
the composition having a viscosity of from 10 mPa·s to 1000 mPa·s as measured at 25°C and 60 rpm using a B-type

viscometer.

<2> The polymerizable composition for an optical material according to <1>, wherein:

at least one of the two or more different monomers for an optical material is an isocyanate compound having an aromatic ring, and
a content of the basic polymerization catalyst is from 0.010 parts by mass to 0.50 parts by mass with respect to a total of 100 parts by mass of the two or more different monomers for an optical material.

<3> The polymerizable composition for an optical material according to <1>, wherein:

at least one of the two or more different monomers for an optical material is an isocyanate compound having no aromatic ring, and
a content of the basic polymerization catalyst is from more than 0.05 parts by mass to 2.0 parts by mass with respect to a total of 100 parts by mass of the two or more different monomers for an optical material.

<4> The polymerizable composition for an optical material according to any one of <1> to <3>, further including a prepolymer that is a polymer of the two or more different monomers for an optical material and that has a polymerizable functional group.

<5> The polymerizable composition for an optical material according to any one of <1> to <4>, wherein the two or more different monomers for an optical material further include at least one active hydrogen compound selected from the group consisting of a polythiol compound having at least two mercapto groups, a hydroxythiol compound having at least one mercapto group and at least one hydroxy group, a polyol compound having at least two hydroxy groups, and an amine compound.

<6> The polymerizable composition for an optical material according to any one of <1> to <5>, wherein at least one of the two or more different monomers for an optical material is an active hydrogen compound, and a total proportion of the isocyanate compound and the active hydrogen compound with respect to an entirety of the two or more different monomers for an optical material exceeds 70% by mass.

<7> The polymerizable composition for an optical material according to any one of <1> to <6>, wherein a molar number of functional groups of the organic acid having a pKa value of less than 4 is smaller than a molar number of functional groups of the basic polymerization catalyst.

<8> The polymerizable composition for an optical material according to any one of <1> to <7>, wherein the basic polymerization catalyst includes a basic polymerization catalyst having a pKa value of from 4 to 8.

<9> A polymerizable prepolymer composition for an optical material, the composition including a prepolymer that is a polymer of two or more different monomers for an optical material and that has a polymerizable functional group, a basic polymerization catalyst, and an organic acid having a pKa value of less than 4, at least one of the two or more different monomers for an optical material being an isocyanate compound, and
the composition having a viscosity of from 10 mPa·s to 2000 mPa·s as measured at 25°C and 60 rpm using a B-type viscometer.

<10> The polymerizable prepolymer composition for an optical material according to <9>, wherein:

at least one of the two or more different monomers for an optical material is an isocyanate compound having an aromatic ring, and
a content of the basic polymerization catalyst is from 0.002 parts by mass to 1 part by mass with respect to a total of 100 parts by mass of the prepolymer.

<11> The polymerizable prepolymer composition for an optical material according to <9>, wherein:

at least one of the two or more different monomers for an optical material is an isocyanate compound having no aromatic ring, and
a content of the basic polymerization catalyst is from 0.1 parts by mass to 4.0 parts by mass with respect to a total of 100 parts by mass of the prepolymer.

<12> A cured product of the polymerizable composition for an optical material according to any one of <1> to <8> or of the polymerizable prepolymer composition for an optical material according to any one of <9> to <11>.

<13> A method for producing an optical material, the method including:

a preparation process of preparing a polymerizable composition for an optical material including two or more different monomers for optical materials, a basic polymerization catalyst, and an organic acid having a pKa value

of less than 4, at least one of the two or more different monomers for an optical material being an isocyanate compound;
a casting process of adjusting a viscosity of the polymerizable composition for an optical material to from 10 mPa·s to 1000 mPa·s as measured at 25°C and 60 rpm using a B-type viscometer, and casting the polymerizable composition for an optical material into a mold; and
a curing process of curing the polymerizable composition for an optical material by polymerizing the two or more different monomers for an optical material in the mold.

<14> The method for producing an optical material according to <13>, wherein:

at least one of the two or more different monomers for an optical material is an isocyanate compound having an aromatic ring, and
a content of the basic polymerization catalyst is from 0.010 parts by mass to 0.50 parts by mass with respect to a total of 100 parts by mass of the two or more different monomers for optical materials.

<15> The method for producing an optical material according to <13>, wherein:

at least one of the two or more different monomers for an optical material is an isocyanate compound having no aromatic ring, and
a content of the basic polymerization catalyst is from more than 0.05 parts by mass to 2.0 parts by mass with respect to a total of 100 parts by mass of the two or more different monomers for an optical material.

<16> A method for producing an optical material, the method including:

a preparation process of preparing two or more different monomers for an optical material and a basic polymerization catalyst, at least one of the two or more different monomers for an optical material being an isocyanate compound;
a prepolymerization process of obtaining a prepolymer by mixing a part of the two or more different monomers for an optical material with at least a part of the basic polymerization catalyst, and at least partly polymerizing the part of the two or more different monomers for an optical material, thereby obtaining a mixture containing the prepolymer; and
an acid addition process of adding an organic acid having a pKa value of less than 4 to the mixture containing the prepolymer.

<17> The method for producing an optical material according to <16>, wherein:

at least one of the two or more different monomers for an optical material is an isocyanate compound having an aromatic ring,
a total amount of the two or more different monomers for an optical material is 100 parts by mass, and an amount of the basic polymerization catalyst is from 0.010 parts by mass to 0.50 parts by mass.

<18> The method for producing an optical material according to <16>, wherein:

at least one of the two or more different monomers for an optical material is an isocyanate compound having no aromatic ring,
a total amount of the two or more different monomers for an optical material is 100 parts by mass, and an amount of the basic polymerization catalyst is from more than 0.05 parts by mass to 2.0 parts by mass.

<19> The method for producing an optical material according to any one of <16> to <19>, further including:

a polymerizable composition production process of obtaining a polymerizable composition for an optical material containing the two or more different monomers for an optical material, the prepolymer, the basic polymerization catalyst, and the organic acid having a pKa value of less than 4, by adding at least a remainder of the two or more different monomers for an optical material to the mixture containing the prepolymer; and
a curing process of curing the two or more different monomers for an optical material in the polymerizable composition to obtain an optical material that is a cured product of the polymerizable composition.

<20> A cured product of two or more different monomers for an optical material, at least one of the two or more different

monomers for an optical material being an isocyanate compound, the cured product having no striation with a length of 1.0 mm or more within a radius of 15 mm from the center of the cured product, and
the cured product having a content of amine measured by gas chromatography-mass spectrometry of more than 0% by mass, and a content of an organic acid having a pKa value of less than 4 measured by gas chromatography-mass spectrometry of more than 0% by mass.
<21> The cured product according to <20>, wherein:

at least one of the two or more different monomers for an optical material is an isocyanate compound having an aromatic ring, and
the content of amine is from 0.001% by mass to 0.50% by mass, and the content of the organic acid having a pKa value of less than 4 is from 0.001% by mass to 1% by mass.

<22> The cured product according to <20>, wherein:

at least one of the two or more different monomers for an optical material is an isocyanate compound having no aromatic ring, and
the content of amine is from 0.03% by mass to 2.5% by mass, and the content of the organic acid having a pKa value of less than 4 is from 0.01% by mass to 5% by mass.

[Effect of the Invention]

According to an embodiment of the present disclosure, a polymerizable composition and a polymerizable prepolymer composition that enable a reduction in the manufacturing time of optical materials and that exhibit excellent pot life.
According to another embodiment of the present disclosure, a method for producing an optical material using the foregoing polymerizable composition or polymerizable prepolymer composition, and a cured product obtained by using the foregoing polymerizable composition or polymerizable prepolymer composition are provided.

[Embodiments for Implementing the Invention]

In the present disclosure, a numerical range expressed using "to" refers to a range including the numerical values described before and after the "to" as the lower limit and upper limit, respectively.
In the present disclosure, the amount of each component in a composition means, unless otherwise specified, the total amount of all substances present in the composition that correspond to the component, when a plurality of such substances are present.
In the stepped numerical ranges described in the present disclosure, the upper or lower limit described in one numerical range may be replaced with the upper or lower limit of another stepped numerical range. In addition, in the numerical ranges described in the present disclosure, the upper or lower limit of the range may be replaced with a value shown in the Examples.
In the present disclosure, the term "process" includes not only an independent process but also a process that is not clearly distinguishable from another process, provided that the intended purpose of the process is achieved.

<<Polymerizable Composition for Optical Material>>

The polymerizable composition for an optical material of the present disclosure includes two or more different monomers for an optical material, a basic polymerization catalyst, and an organic acid having a pKa value of less than 4, at least one of the two or more different monomers for an optical material being an isocyanate compound, and the composition having a viscosity of from 10 mPa·s to 1000 mPa·s as measured at 25°C and 60 rpm using a B-type viscometer.
Hereinafter, the polymerizable composition for an optical material may be simply referred to as a "polymerizable composition".
The polymerizable composition of the present disclosure enables a reduction in the manufacturing time of optical materials, and also exhibits excellent pot life.
Specifically, when a polymerizable composition includes a basic polymerization catalyst as the polymerization catalyst at a relatively large amount, a polymerization reaction thereof during curing proceeds rapidly, thereby shortening the manufacturing time of an optical material as a cured product. On the other hand, the viscosity of the polymerizable composition after preparation tends to increase readily, resulting in a tendency toward a short pot life.
The polymerizable composition of the present disclosure suppresses an increase in viscosity after preparation by

containing an organic acid having a pKa value of less than 4. This is presumably because the organic acid having a pKa value of less than 4 forms a salt with the basic polymerization catalyst, thereby suppressing the activity of the basic polymerization catalyst.

In the curing step of the polymerizable composition, it is considered that the salt formed between the organic acid having a pKa value of less than 4 and the basic polymerization catalyst dissociates upon heating, whereby the activity of the basic polymerization catalyst is expressed and the polymerization reaction proceeds rapidly.

Furthermore, a polymerizable composition with excellent pot life exhibits superior injectability into a mold, and therefore enables the production of a cured product having excellent optical properties, such as a reduced occurrence of striae.

(Optical Material Monomer)

The polymerizable composition contains two or more different optical material monomers (monomers for an optical material), and at least one of the monomers is an isocyanate compound.

The optical material monomer is not particularly limited, provided that it may be used in the production of optical materials.

For example, the optical material monomer may be those used to produce optical materials having at least one of the properties described below.

An optical material obtained using the optical material monomer may have a total light transmittance of 10% or more. The total light transmittance of the optical material may be measured in accordance with JIS K 7361-1 (1997).

An optical material obtained using the optical material monomer may have a haze (i.e., total haze) of 10% or less, 1% or less, or 0.5% or less. The haze of the optical material is a value measured at 25°C in accordance with JIS K 7105 using a haze meter (TC-HIII DPK, manufactured by Tokyo Denshoku Co., Ltd.).

An optical material obtained using the optical material monomer may have a refractive index of 1.56 or more, preferably 1.58 or more. The refractive index of the optical material may be 1.80 or less, or 1.75 or less. The refractive index of the optical material can be measured in accordance with JIS K 7142 (2014).

The shape of the optical material obtained using the optical material monomer is not particularly limited, and may be, for example, a plate shape, a cylindrical shape, a rectangular parallelepiped shape, or the like.

Examples of the optical material monomers include compounds that have a property of being polymerized when a basic polymerization catalyst described below is used. Specific examples of such compounds include isocyanate compounds, polythiol compounds having at least two mercapto groups, hydroxythiol compounds containing at least one mercapto group and at least one hydroxy group, polyol compounds containing at least two hydroxy groups, and amine compounds.

The optical material monomer preferably includes an active hydrogen compound together with an isocyanate compound.

The optical material monomer preferably includes at least one active hydrogen compound selected from the group consisting of a polythiol compound having at least two mercapto groups, a hydroxythiol compound containing at least one mercapto group and at least one hydroxyl group, a polyol compound containing at least two hydroxy groups, and an amine compound.

[Isocyanate Compound]

Examples of isocyanate compounds include aliphatic isocyanate compounds, alicyclic isocyanate compounds, aromatic isocyanate compounds, and heterocyclic isocyanate compounds. These isocyanate compounds may include dimers, trimers, and prepolymers. Examples of such isocyanate compounds include those illustrated in International Publication No. WO 2011/055540.

Furthermore, the isocyanate compounds may include halogen-substituted derivatives (e.g., chlorine-substituted or bromine-substituted derivatives), alkyl-substituted derivatives, alkoxy-substituted derivatives, carbodiimide-modified products, urea-modified products, or biuret-modified products of the above-described compounds;

prepolymer-type modified products obtained from the above-described compounds and nitro-substituted compounds, polyhydric alcohols, or the like; and
dimerization or trimerization reaction products of the above-described compounds.

These compounds may be used alone or in combination of two or more kinds.

In the present disclosure, an aliphatic isocyanate compound refers to an isocyanate compound that does not contain an aromatic structure, an alicyclic structure, or a heterocyclic structure.

An alicyclic isocyanate compound refers to an isocyanate compound that contains an alicyclic structure, does not

contain an aromatic structure, and may contain a heterocyclic structure.

An aromatic isocyanate compound refers to an isocyanate compound that contains an aromatic structure and may contain any one of an aliphatic structure, an alicyclic structure or a heterocyclic structure, or a combination thereof.

A heterocyclic isocyanate compound refers to an isocyanate compound that contains a heterocyclic structure and does not contain an alicyclic structure or an aromatic structure.

In the present disclosure, a heterocycle or heterocyclic structure having aromaticity is not regarded as an aromatic ring or an aromatic structure.

The two or more different optical material monomers preferably include at least one selected from the group consisting of aliphatic isocyanate compounds, alicyclic isocyanate compounds, aromatic isocyanate compounds, and heterocyclic isocyanate compounds.

At least one of the optical material monomers may be an isocyanate compound having an aromatic ring.

Examples of the aromatic ring include a benzene ring, a naphthalene ring, and an anthracene ring, among which a benzene ring is preferred.

Specific examples of the isocyanate compound having an aromatic ring include aromatic isocyanate compounds, and more specifically include isocyanate compounds in which an isocyanate group is directly bonded to an aromatic ring, and isocyanate compounds in which an isocyanate group is bonded to a benzylic position of an aromatic ring.

The isocyanate compound having an aromatic ring is preferable in that the isocyanate group has higher reactivity and more readily promotes a polymerization reaction, as compared with an isocyanate compound having no aromatic ring.

At least one of the optical material monomers may be an isocyanate compound not having an aromatic ring.

Specific examples of the isocyanate compound not having an aromatic ring include alicyclic isocyanate compounds not having an aromatic ring, heterocyclic isocyanate compounds, and aliphatic isocyanate compounds.

The isocyanate compound not having an aromatic ring is preferable in that the polymerization reaction is not excessively rapid and can be more easily controlled, as compared with an isocyanate compound having an aromatic ring.

The optical material monomers may include an isocyanate compound having an aromatic ring and an isocyanate compound not having an aromatic ring.

When the optical material monomers include both an isocyanate compound not having an aromatic ring and an isocyanate compound having an aromatic ring, from the viewpoint of controlling the polymerization reaction, the ratio (A:B) of the isocyanate compound not having an aromatic ring (A) to the isocyanate compound having an aromatic ring (B) is preferably in the range of from 3:7 to 0:10, and more preferably in the range of from 2:8 to 0:10, in terms of the molar ratio of isocyanate groups.

When the optical material monomers include an isocyanate compound not having an aromatic ring and an isocyanate compound having an aromatic ring, it is preferable that the molar number of isocyanate groups in the isocyanate compound not having an aromatic ring is smaller than the molar number of isocyanate groups in the isocyanate compound having an aromatic ring.

From the viewpoints of maintaining the quality and shortening the production time of the optical material, the isocyanate compound preferably includes at least one selected from the group consisting of isophorone diisocyanate, 2,5-bis(isocyanatomethyl)bicyclo[2.2.1]heptane, 2,6-bis(isocyanatomethyl)bicyclo[2.2.1]heptane, m-xylylene diisocyanate, 2,4-tolylene diisocyanate, 2,6-tolylene diisocyanate, dicyclohexylmethane diisocyanate, 1,3-bis(isocyanatomethyl)cyclohexane, 1,4-bis(isocyanatomethyl)cyclohexane, 1,6-hexamethylene diisocyanate, and 1,5-pentamethylene diisocyanate; and

more preferably at least one selected from the group consisting of isophorone diisocyanate, 2,5-bis(isocyanatomethyl)bicyclo[2.2.1]heptane, 2,6-bis(isocyanatomethyl)bicyclo[2.2.1]heptane, m-xylylene diisocyanate, 2,4-tolylene diisocyanate, 2,6-tolylene diisocyanate, dicyclohexylmethane diisocyanate, and 1,3-bis(isocyanatomethyl)cyclohexane.

[Active Hydrogen Compound]

Examples of the active hydrogen compound include polythiol compounds having at least two mercapto groups, hydroxythiol compounds containing at least one mercapto group and at least one hydroxy group, polyol compounds containing at least two hydroxy groups, and amine compounds.

As the active hydrogen compound, oligomers of the foregoing active hydrogen compounds and halogen-substituted derivatives (for example, chlorine-substituted derivatives and bromine-substituted derivatives) of the foregoing active hydrogen compounds may be used.

The active hydrogen compound may be used alone or in combination of two or more kinds.

(Polythiol Compound Having At Least Two Mercapto Groups)

Examples of the polythiol compound having at least two mercapto groups include the compounds exemplified in

International Publication No. 2016/125736.

From the viewpoints of maintaining the quality and shortening the production time of the optical material, the polythiol compound preferably contains at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), bis(mercaptoethyl) sulfide, pentaerythritol tetrakis(2-mercaptoacetate), 2,5-bis(mercaptomethyl)-1,4-dithiane, 1,1,3,3-tetrakis(mercaptomethylthio)propane, 4,6-bis(mercaptomethylthio)-1,3-dithiane, and 2-(2,2-bis(mercaptomethylthio)ethyl)-1,3-dithietane;

more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), pentaerythritol tetrakis(2-mercaptoacetate), and 2,5-bis(mercaptomethyl)-1,4-dithiane;

still more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate).

(Polythiol Compound Having At Least Three Mercapto Groups)

Examples of the active hydrogen compound also include a polythiol compound having at least three mercapto groups.

When the polymerizable composition contains a polythiol compound having at least three mercapto groups as the active hydrogen compound, from the viewpoint of promoting the polymerization reaction, the composition preferably contains a compound in which at least one mercapto group among the at least three mercapto groups contained in the polythiol compound is substituted with a group represented by the following formula (N1) (also referred to as "compound (N1)").

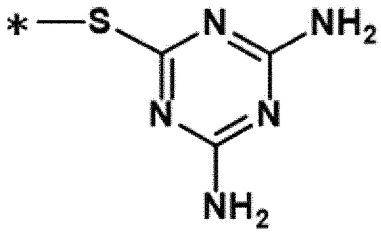

(N1)

In formula (N1), * represents a bonding position.

When the polymerizable composition contains a polythiol compound having at least three mercapto groups as the active hydrogen compound, from the viewpoint of controlling the polymerization reaction, the peak area of compound (N1) is preferably 3.0 or less, and more preferably 1.5 or less, with respect to the peak area given as 100 of the polythiol compound having at least three mercapto groups, in which the peak areas are measured by high-performance liquid chromatography (HPLC).

From the viewpoint of promoting the polymerization reaction, the peak area of compound (N1) is preferably 0.01 or more with respect to 100 of the peak area of the polythiol compound having at least three mercapto groups, in which the peak areas are measured by HPLC.

The peak areas determined by HPLC can be measured by the method described, for example, in paragraph [0146] of International Publication No. 2014/027665.

(Hydroxythiol Compound Containing At Least One Mercapto Group and At Least One Hydroxy Group)

Examples of the thiol compound having a hydroxy group include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate).

(Polyol Compound Containing At Least Two Hydroxy Groups)

Examples of the polyol compound include one or more aliphatic or alicyclic alcohols. Specific examples of the

polyol compound include linear or branched aliphatic alcohols, alicyclic alcohols, and alcohols obtained by adding, to the foregoing alcohols, at least one selected from the group consisting of ethylene oxide, propylene oxide, and ε-caprolactone. More specific examples of the polyol compound include the compounds exemplified in International Publication No. 2016/125736.

The polyol compound is preferably at least one selected from the group consisting of ethylene glycol, diethylene glycol, triethylene glycol, propylene glycol, 1,3-propanediol, 1,2-cyclopentanediol, 1,3-cyclopentanediol, 1,2-cyclohexanediol, 1,3-cyclohexanediol, and 1,4-cyclohexanediol.

(Amine Compound)

Examples of amine compounds include:

primary polyamine compounds such as ethylenediamine, 1,2- or 1,3-diaminopropane, 1,2-, 1,3- or 1,4-diaminobutane, 1,5-diaminopentane, 1,6-diaminohexane, 1,7-diaminoheptane, 1,8-diaminooctane, 1,10-diaminodecane, 1,2-, 1,3- or 1,4-diaminocyclohexane; o-, m- or p-diaminobenzene, 3,4- or 4,4'-diaminobenzophenone, 3,4- or 4,4'-diaminodiphenyl ether, 4,4'-diaminodiphenylmethane, 4,4'-diaminodiphenyl sulfide, 3,3'- or 4,4'-diaminodiphenyl sulfone, 2,7-diaminofluorene, 1,5-, 1,8- or 2,3-diaminonaphthalene, 2,3-, 2,6- or 3,4-diaminopyridine, 2,4- or 2,6-diaminotoluene, m- or p-xylylenediamine, isophoronediamine, diaminomethylbicycloheptane, 1,3- or 1,4-diaminomethylcyclohexane, 2- or 4-aminopiperidine, 2- or 4-aminomethylpiperidine, 2- or 4-aminoethylpiperidine, N-aminoethylmorpholine and N-aminopropylmorpholine;

monofunctional secondary amine compounds such as diethylamine, dipropylamine, di-n-butylamine, di-sec-butylamine, diisobutylamine, di-n-pentylamine, di-3-pentylamine, dihexylamine, dioctylamine, di(2-ethylhexyl)amine, methylhexylamine, diallylamine, N-methylallylamine, piperidine, pyrrolidine, diphenylamine, N-methylamine, N-ethylamine, dibenzylamine, N-methylbenzylamine, N-ethylbenzylamine, dicyclohexylamine, N-methylaniline, N-ethylaniline, dinaphthylamine, 1-methylpiperazine, and morpholine; and

secondary polyamine compounds such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,5-diaminopentane, N,N'-diethyl-1,6-diaminohexane, N,N'-diethyl-1,7-diaminheptane, piperazine, 2-methylpiperazine, 2,5-dimethylpiperazine, 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane, and tetramethylguanidine.

Among the foregoing compounds, from the viewpoints of improving the heat resistance and refractive index of the cured product, the active hydrogen compound preferably contains a polythiol compound having at least two mercapto groups.

The content of the polythiol compound having at least two mercapto groups is preferably 60% by mass or more, more preferably 70% by mass or more, and even more preferably 80% by mass or more, based on the total mass of the active hydrogen compound.

As the active hydrogen compound, the total content of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate) is preferably 60% by mass or more, more preferably 70% by mass or more, and still more preferably 80% by mass or more, based on the total mass of the active hydrogen compound.

In the polymerizable composition, the molar ratio of isocyanate groups (NCO groups) in the isocyanate compound to the total amount of hydroxyl groups (OH groups) and mercapto groups (SH groups) in the active hydrogen compound (NCO groups/(OH groups + SH groups)) is preferably 0.8 or more, more preferably 0.85 or more, and still more preferably 0.9 or more.

In the polymerizable composition, the molar ratio of isocyanate groups (NCO groups) in the isocyanate compound to the total amount of hydroxyl groups (OH groups) and mercapto groups (SH groups) in the active hydrogen compound (NCO groups/(OH groups + SH groups)) is preferably 1.2 or less, more preferably 1.15 or less, and still more preferably 1.1 or less.

When the polymerizable composition contains an isocyanate compound and an active hydrogen compound as the optical material monomers, the total proportion of the isocyanate compound and the active hydrogen compound with respect to the total amount of the optical material monomers is preferably more than 70% by mass, more preferably 75% by mass or more, and still more preferably 80% by mass or more.

The total proportion of the isocyanate compound and the active hydrogen compound with respect to the total

amount of the optical material monomers may be 100% by mass, less than 100% by mass, 95% by mass or less, or 90% by mass or less.

<Basic Polymerization Catalyst>

The polymerizable composition contains at least one basic polymerization catalyst.

The basic polymerization catalyst may be used alone or in combination of two or more kinds.

The basic polymerization catalyst may include amine-based catalysts (including imidazole-based catalysts).

Specific examples of the amine-based catalyst include triethylenediamine, N,N-dimethylethanolamine, triethylamine, N-ethylmorpholine, 2-methylpyrazine, pyridine, α-picoline, β-picoline, γ-picoline, 2-ethylpyridine, 3-ethylpyridine, 4-ethylpyridine, 2-propylpyridine, 2,4-lutidine, 3,4-lutidine, 2-methyl-5-ethylpyridine, 3,5-diethylpyridine, 2,3,5-collidine, 2,3-cyclopentenopyridine, 2,3-cyclohexenopyridine, 2,3-cycloheptenopyridine, 2-phenylpyridine, 4-phenylpyridine, 2-(4-methylphenyl)pyridine, 2,6-lutidine, 3,5-lutidine, 2,4,6-collidine, 3-chloropyridine, N,N-diethylaniline, N,N-dimethylaniline, hexamethylenetetramine, quinoline, isoquinoline, N,N-dimethyl-p-toluidine, N,N-dimethylpiperazine, quinaldine, 4-methylmorpholine, triallylamine, trioctylamine, 1-phenylimidazole, 1,2-dimethylimidazole, and 1-benzyl-2-methylimidazole.

As the basic polymerization catalyst, an amine-based catalyst is preferred.

Preferred examples of the amine-based catalyst include tertiary amine catalysts such as 3,5-lutidine, 2,6-lutidine, 2,4,6-collidine, 2-ethylpyridine, 2,4-lutidine, 2-methyl-5-ethylpyridine, 2,3,5-collidine, triethylenediamine, N,N-dimethylethanolamine, triethylamine, and N-ethylmorpholine.

From the viewpoint of promoting the polymerization reaction during the curing process, the amine-based catalyst preferably contains at least one selected from the group consisting of 3,5-lutidine, 2,6-lutidine, 2,4,6-collidine, 2-ethylpyridine, 2,4-lutidine, 2-methyl-5-ethylpyridine, 2,3,5-collidine, triethylenediamine, and N-ethylmorpholine.

The basic polymerization catalyst may preferably include a compound represented by the following general formula (2) and/or a compound represented by the following general formula (3).

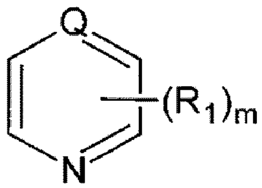

(2)

In general formula (2), $R_1$ represents a linear alkyl group having 1 to 20 carbon atoms, a branched alkyl group having 3 to 20 carbon atoms, a cycloalkyl group having 3 to 20 carbon atoms, or a halogen atom. When multiple $R^1$ groups are present, they may be the same or different from each other. Q represents a carbon atom or a nitrogen atom, and m represents an integer of 0 to 5.

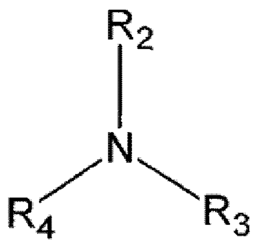

(3)

In general formula (3), each of $R_2$, $R_3$ and $R_4$ independently represents a linear alkyl group having 3 to 20 carbon atoms, a branched alkyl group having 3 to 20 carbon atoms, a cycloalkyl group having 3 to 20 carbon atoms, an allyl group, or a hydrocarbon group containing a hydroxy group.

The pKa value of the basic polymerization catalyst is preferably 1 or more, more preferably 3 or more, and still more preferably 4 or more.

The pKa value of the basic polymerization catalyst is preferably 9 or less, and more preferably 8 or less.

The pKa value (acid dissociation constant) can be measured, for example, by (a) the method described in The Journal of Physical Chemistry, Vol. 68, No. 6, page 1560 (1964); (b) a method using an automatic potentiometric titrator (e.g., AT-610, trade name) manufactured by Kyoto Electronics Manufacturing Co., Ltd. Alternatively, (c) the acid dissociation constants described in Chemical Handbook (Revised 3rd Edition, June 25, 1984, published by Maruzen Co., Ltd., edited by the Chemical Society of Japan) may be used as the pKa values of the basic polymerization catalyst.

The basic polymerization catalyst preferably includes at least one selected from basic polymerization catalysts having a pKa value of from 4 to 8.

In the polymerizable composition of the present disclosure, the amount of the basic polymerization catalyst with respect to a total of 100 parts by mass of the two or more different optical material monomers is not particularly limited.

For example, the amount of the basic polymerization catalyst with respect to a total of 100 parts by mass of the two or more different optical material monomers may be selected from a range of from 0.010 parts by mass to 2.0 parts by mass.

A polymerizable composition in which the amount of the basic polymerization catalyst falls within the above range contains a larger amount of polymerization catalyst as compared with polymerizable compositions used in conventional methods for producing optical materials.

Therefore, in the curing process in which the optical material monomers in the polymerizable composition are polymerized, it is possible to generate the reaction heat of the polymerizable composition (i.e., heat generated by self-heating) in a short period of time. Consequently, the polymerization reaction can be effectively promoted.

Furthermore, the thermal convection, which is presumed to be a cause of striations, is suppressed due to a rapid increase in viscosity caused by the polymerization reaction of the polymerizable composition. As a result, it is possible to obtain high-quality optical materials.

The amount of the basic polymerization catalyst may be determined according to the type of the isocyanate compound contained in the polymerizable composition. For example, the amount of the basic polymerization catalyst may be determined depending on whether or not the isocyanate compound has an aromatic ring.

When at least one of the two or more different optical material monomers is an isocyanate compound having an aromatic ring, the amount of the basic polymerization catalyst with respect to a total of 100 parts by mass of the two or more different optical material monomers is preferably from 0.010 parts by mass to 0.50 parts by mass.

When the amount of the basic polymerization catalyst used together with an isocyanate compound having an aromatic ring is 0.010 parts by mass or more, the polymerization reaction can be effectively promoted, whereby high-quality optical materials can be obtained in a short time. In addition, by effectively promoting the polymerization reaction, the releasability of the cured product when removing the same from the mold can be improved.

From the foregoing viewpoints, the amount of the basic polymerization catalyst with respect to a total of 100 parts by mass of the two or more different optical material monomers is preferably 0.020 parts by mass or more, and more preferably 0.030 parts by mass or more.

When the amount of the basic polymerization catalyst used together with an isocyanate compound having an aromatic ring is 0.50 parts by mass or less, for example, it is possible to improve the handling properties of the polymerizable composition when pouring the same into a mold.

From this viewpoint, the amount of the basic polymerization catalyst with respect to a total of 100 parts by mass of the two or more different optical material monomers is preferably 0.20 parts by mass or less, more preferably 0.10 parts by mass or less, and still more preferably 0.09 parts by mass or less.

When at least one of the two or more different optical material monomers is an isocyanate compound having no aromatic ring, the content of the basic polymerization catalyst with respect to a total of 100 parts by mass of the two or more different optical material monomers is preferably from more than 0.05 parts by mass to 2.0 parts by mass.

When the amount of the basic polymerization catalyst used together with an isocyanate compound having no aromatic ring is more than 0.05 parts by mass, the polymerization reaction can be effectively promoted, whereby high-quality optical materials can be obtained in a short time. In addition, by effectively promoting the polymerization reaction, the releasability of the cured product when removing the same from the mold can be improved.

From this viewpoint, the amount of the basic polymerization catalyst with respect to a total of 100 parts by mass of the two or more different optical material monomers is preferably 0.08 parts by mass or more, more preferably 0.10 parts by mass or more, still more preferably 0.13 parts by mass or more, and particularly preferably 0.15 parts by mass or more.

When the amount of the basic polymerization catalyst used together with an isocyanate compound having no aromatic ring is 2.0 parts by mass or less, for example, it is possible to improve the handling properties of the polymerizable composition when pouring the same into a mold.

From this viewpoint, the amount of the basic polymerization catalyst with respect to a total of 100 parts by mass of the two or more different optical material monomers is preferably 1.8 parts by mass or less, more preferably 1.5 parts by mass or less, still more preferably 1.0 part by mass or less, particularly preferably 0.5 parts by mass or less, and most preferably 0.3 parts by mass or less.

In the present disclosure, the content of the basic polymerization catalyst in the polymerizable composition can be determined as appropriate depending on the type of the basic polymerization catalyst, the types and amounts of the monomers used (such as isocyanate compounds, active hydrogen compounds, and other components), and the desired shape of the molded article.

When the polymerizable composition contains a prepolymer that is a polymer of the optical material monomers, the above-described content of the basic polymerization catalyst is defined as the amount with respect to 100 parts by

mass of the optical material monomers including the raw materials of the prepolymer.

The above-described range of the content of the basic polymerization catalyst may be appropriately modified depending on the types of the optical material monomers and the polymerization catalyst.

The basic polymerization catalyst preferably satisfies the following Condition 1.

[Condition 1]

The value of $-Ea/R$ is from $-7100$ to $-2900$.

Ea is the activation energy calculated by an Arrhenius plot from the reaction rate constants of the two or more different optical material monomers at two or more different temperatures, and R is the gas constant (8.314 J/mol/K).

When the basic polymerization catalyst satisfies Condition 1, it is possible to suppress variations in the polymerization rate of the polymerizable composition. As a result, it is possible to suppress the occurrence of optical distortion and the formation of striae, thereby obtaining an optical material having an excellent appearance.

The value of Ea is calculated by the following method.

First, a composition 1 containing a polymerizable reactive compound and a predetermined amount of a polymerization catalyst is subjected to a property acquisition step in which the composition 1 is heated and maintained at multiple temperatures, thereby obtaining a physical property value 1a derived from functional groups of the polymerizable reactive compound before heating and a physical property value 1b derived from residual functional groups after being maintained at the predetermined temperature for a predetermined time.

Next, a residual functional group ratio calculation step is performed, in which the residual functional group ratio 1 at each of the multiple temperatures is calculated from the physical property values 1a and 1b.

Then, a reaction rate constant calculation step is performed, in which reaction rate constants 1 at the multiple temperatures are calculated from the residual functional group ratio 1 based on a reaction rate equation.

Subsequently, a fitting step is performed, in which an activation energy Ea1 and a frequency factor A1 are calculated from the reaction rate constants 1 at the multiple temperatures by an Arrhenius plot.

Based on the calculated value of Ea, whether or not the polymerization catalyst satisfies Condition 1 is determined.

Specific embodiments of the method for calculating the value of Ea and the method for determining whether or not the polymerization catalyst satisfies Condition 1 are the same as those described in International Publication No. WO 2020/256057.

<Organic Acid Having pKa Value of Less Than 4>

The polymerizable composition of the present disclosure contains at least one organic acid having a pKa value of less than 4.

The organic acid having a pKa value of less than 4 may be used alone, or two or more kinds thereof may be used in combination.

The organic acid having a pKa value of less than 4 contained in the polymerizable composition forms a salt with the basic polymerization catalyst, and suppresses the activity of the basic polymerization catalyst. Therefore, an increase in viscosity caused by the polymerization reaction of the monomers after preparation of the polymerizable composition is suppressed, and the pot life of the polymerizable composition is improved.

Specific examples of the organic acid having a pKa value of less than 4 include 10-camphorsulfonic acid (pKa: 1.2), methanesulfonic acid (pKa: -2.6), ethanesulfonic acid (pKa: 1.8), propanesulfonic acid (pKa: 1.9), butanesulfonic acid (pKa: 1.9), p-toluenesulfonic acid (pKa: -2.8), vinylsulfonic acid (pKa: -2.7), benzenesulfonic acid (pKa: 0.7), formic acid (pKa: 3.8), and phthalic acid (pKa: 2.9).

The organic acid may form a hydrate.

The content of the organic acid having a pKa value of less than 4 contained in the polymerizable composition may be, for example, 0.001 parts by mass or more with respect to a total of 100 parts by mass of the two or more different optical-material monomers.

When the content of the organic acid having a pKa value of less than 4 is 0.001 parts by mass or more with respect to a total of 100 parts by mass of the two or more different optical-material monomers, an increase in viscosity of the polymerizable composition is effectively suppressed.

From this viewpoint, the content of the organic acid having a pKa value of less than 4 with respect to a total of 100 parts by mass of the two or more different optical-material monomers is preferably 0.005 parts by mass or more, and more preferably 0.01 parts by mass or more.

The content of the organic acid having a pKa value of less than 4 contained in the polymerizable composition may be, for example, 1 part by mass or less with respect to a total of 100 parts by mass of the two or more different optical-

material monomers.

When the content of the organic acid having a pKa value of less than 4 is 1 part by mass or less with respect to a total of 100 parts by mass of the two or more different optical-material monomers, thermal dissociation of the salt formed between the organic acid and the basic polymerization catalyst is promoted during the curing process, and the activity of the basic polymerization catalyst is readily expressed. As a result, the polymerization reaction can proceed rapidly.

From this viewpoint, the content of the organic acid having a pKa value of less than 4 with respect to a total of 100 parts by mass of the two or more different optical material monomers is preferably 0.50 parts by mass or less, and more preferably 0.1 parts by mass or less.

When the polymerizable composition contains a prepolymer that is a polymer of the optical material monomers, the content of the organic acid having a pKa value of less than 4 described above refers to the content with respect to a total of 100 parts by mass of the optical material monomers including the raw materials of the prepolymer.

The molar ratio (X/Y) of the organic acid having a pKa value of less than 4 (X) to the basic polymerization catalyst (Y) is preferably from 0.1 to 2.0, more preferably from 0.15 to 1.25, and still more preferably from 0.2 to 1.2.

From the viewpoint of causing the basic polymerization catalyst to express its activity in a favorable manner, the molar number of functional groups of the organic acid having a pKa value of less than 4 (x) in the polymerizable composition is preferably smaller than the molar number of functional groups of the basic polymerization catalyst (y) (i.e., the molar ratio expressed as x/y is less than 1.0). In other words, it is preferable that an excess amount of the basic polymerization catalyst with respect to the organic acid having a pKa value of less than 4 is present in the polymerizable composition.

(Other Additives)

The polymerizable composition may contain optional additives.

Examples of the optional additives include photochromic compounds, internal mold release agents, bluing agents, and ultraviolet absorbers.

(Photochromic Compounds)

The photochromic compound is a compound that changes its molecular structure in a reversible manner upon application of light of a specific wavelength, thereby changing the light absorption characteristics thereof (absorption spectrum).

Examples of the photochromic compound include compounds that change their absorption characteristics (absorption spectrum) in response to light of a specific wavelength.

The photochromic compound is not particularly limited, and any conventionally known compound usable in photochromic lenses may be appropriately selected and used. For example, one or more compounds such as spiropyran compounds, spirooxazine compounds, fulgide compounds, naphthopyran compounds, bisimidazole compounds, and the like may be used according to the desired manner of coloration.

(Internal Release Agent)

Examples of the internal release agent include acidic phosphate esters. Examples of the acidic phosphate esters include phosphate monoesters and phosphate diesters, each of which may be used alone or in combination of two or more kinds.

(Bluing Agent)

Examples of the bluing agent include those having an absorption band in the region of from orange to yellow of the visible light spectrum, and having a function of adjusting the hue of an optical material composed of a resin. More specifically, the bluing agent includes a substance that exhibits a color of from blue to violet.

(Ultraviolet Absorber)

Examples of the ultraviolet absorber include benzophenone-based ultraviolet absorbers such as 2,2'-dihydroxy-4-methoxybenzophenone; triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine; and benzotriazole-based ultraviolet absorbers such as 2-(2H-benzotriazol-2-yl)-4-methylphenol, 2-(2H-benzotriazol-2-yl)-4-tert-octylphenol, and 2-(5-chloro-2H-benzotriazol-2-yl)-4-methyl-6-tert-butylphenol.

(Viscosity)

From the viewpoint of suppressing the formation of striae in the cured product, the polymerizable composition has a viscosity, as measured with a B-type viscometer at 25 °C and 60 rpm, of 10 mPa·s or more, preferably 40 mPa·s or more, more preferably 70 mPa·s or more, still more preferably 80 mPa·s or more, particularly preferably 100 mPa·s or more, and even more preferably 120 mPa·s or more.

From the viewpoint of maintaining a favorable handleability when molding the optical material into a desired shape, the polymerizable composition has a viscosity, as measured with a B-type viscometer at 25 °C and 60 rpm, of 1000 mPa·s or less, preferably 700 mPa·s or less, and more preferably 400 mPa·s or less.

The viscosity of the polymerizable composition may be adjusted depending on the intended use of the resulting cured product.

For example, when the cured product is obtained using a mold for plastic lenses having a narrow (for example, from 1 mm to 3 mm) injection port, the viscosity of the polymerizable composition is preferably from 10 mPa·s to 100 mPa·s from viewpoint of suppressing the formation of striae.

On the other hand, when the cured product is obtained using a mold for ordinary lenses other than plastic lenses, which has a wide (for example, from 5 mm to 15 mm) injection port, the viscosity of the polymerizable composition is preferably from 10 mPa·s to 1000 mPa·s, and more preferably 100 mPa·s to 1000 mPa·s, from viewpoint of suppressing the formation of striae.

By increasing the viscosity of the polymerizable composition, it is possible to suppress the thermal convection caused by a temperature difference between the interior and exterior of the polymerizable composition, which occurs when heat is applied from the outside, thereby reducing the formation of striae due to the thermal convection.

In a case of the conventional polymerizable composition, in which the content of a catalyst is small, the rate of increase in viscosity during polymerization is insufficient. Therefore, it is not possible to increase the viscosity to such an extent that the thermal convection can be suppressed, thereby making it difficult to achieve a rapid increase in temperature in a short time. In addition, a longer time is required to complete the polymerization.

In contrast, according to the present disclosure, it is possible to increase the viscosity of an entirety of the composition more rapidly due to the amount of the catalyst increased to an optimal range in consideration of the reactivity of an isocyanate compound having an aromatic ring. As a result, it is possible to suppress the thermal convection caused by a rapid temperature increase, while reducing the uneven polymerization, thereby promoting the polymerization to proceed in a short time.

(Thickening Rate)

From the viewpoint of shortening the time to cure the polymerizable composition, the slope of the thickening rate of the polymerizable composition is preferably 0.005 or more, more preferably 0.007 or more, and even more preferably 0.01 or more.

From the viewpoint of improving the pot life of the polymerizable composition, the slope of the thickening rate is preferably 0.04 or less, more preferably 0.035 or less, and even more preferably 0.03 or less.

The slope of the thickening rate of the polymerizable composition is defined as the value of b in the following equation, which is used to approximate the results of plotting the time-dependent change in viscosity at 25°C with the horizontal axis (= X) representing the time (hr) and the vertical axis (= Y) representing the viscosity of the polymerizable composition (mPa·s). In the equation, a represents the intercept.

$$Y=a*\exp(b*X)$$

**In** the above equation, the viscosity X of the polymerizable composition is measured at 25°C using a B-type viscometer under the conditions of 60 rpm or 30 rpm.

**In** the above equation, the time Y represents the time period from a reference time (for example, the time of preparation of the polymerizable composition).

(Thixotropic Ratio)

The thixotropic ratio of the polymerizable composition is preferably 1.3 or less, more preferably 1.2 or less, and still more preferably 1.1 or less.

When the thixotropic ratio of the polymerizable composition is 1.3 or less, it is possible to rapidly fill a container such as a mold with the polymerizable composition, and it is possible to effectively prevent the formation of striae or the like by suppressing the thermal convection during polymerization. As a result, it is possible to maintain the favorable quality of

the obtained optical material.

The thixotropic ratio of the polymerizable composition is preferably 0.9 or more, more preferably 0.95 or more, and still more preferably 1.0 or more.

The thixotropic ratio of the polymerizable composition is calculated by dividing the viscosity $\eta_1$, which is measured using a B-type viscometer at 25°C and a rotational speed of 6 rpm, by the viscosity $\eta_2$, which is measured at a rotational speed of 60 rpm.

The thixotropic ratio of the polymerizable composition can be lowered, for example, by decreasing the molecular weight of two or more optical-material monomers, suppressing the degree of polymerization of a prepolymer to a certain level or lower, or reducing the proportion of structures that impart elasticity in the monomers.

The polymerizable composition preferably further contains a prepolymer that is a polymer of two or more different optical-material monomers and that has a polymerizable functional group.

In the present disclosure, the term "prepolymer" refers to a polymer that is obtained from two or more different optical-material monomers and has a polymerizable functional group.

A cured product obtained by polymerizing the prepolymer together with the two or more different optical-material monomers can be used as an optical material.

Examples of the prepolymer include, for example, a polymer obtained by polymerizing the two of the optical material monomers at an equivalent ratio other than 1:1, or a polymer obtained by polymerizing the two of the optical material monomers at an unbalanced equivalent ratio.

In the present disclosure, the term "polymerizable functional group" refers to a functional group having an ability to polymerize with another polymerizable functional group. Specific examples of the polymerizable functional group include an isocyanate group, a mercapto group, and other functional groups having an active hydrogen, which will be described later.

In the present disclosure, the expression "polymerizing at an equivalent ratio of 1:1" refers to, in the case of polymerizing an isocyanate compound and a polythiol compound, polymerizing the compounds at the amounts in which the molar ratio of isocyanate groups possessed by the isocyanate compound to mercapto groups possessed by the polythiol compound is 1:1.

<<Polymerizable Prepolymer Composition for Optical Materials>>

The polymerizable prepolymer composition for optical materials of the present disclosure includes: a prepolymer that is a polymer of two or more different optical material monomers and that has a polymerizable functional group, a basic polymerization catalyst, and an organic acid having a pKa value of less than 4, at least one of the two or more different monomers for an optical material being an isocyanate compound, and

the composition having a viscosity of from 10 mPa·s to 2000 mPa·s as measured at 25°C and 60 rpm using a B-type viscometer.

Hereinafter, the polymerizable prepolymer composition for optical materials may be simply referred to as a "polymerizable prepolymer composition".

The polymerizable prepolymer composition of the present disclosure is capable of shortening the production time of optical materials, and exhibits excellent pot life.

The specific examples, preferred examples, and preferred embodiments of the optical material monomers, the basic polymerization catalyst, and the organic acid having a pKa value of less than 4 used in the polymerizable prepolymer composition are the same as the specific examples, preferred examples, and preferred embodiments of the optical material monomers, basic polymerization catalyst, and organic acid having a pKa value of less than 4 described above in the section relating to the polymerizable composition for optical materials.

The definition of the prepolymer in the polymerizable prepolymer composition is the same as the definition of the prepolymer described above in the foregoing section concerning the polymerizable composition.

The specific examples, preferred examples, and preferred embodiments of physical properties such as viscosity of the polymerizable prepolymer composition are the same as the specific examples, preferred examples, and preferred embodiments of physical properties described above in the foregoing section concerning the polymerizable composition for optical materials.

In the polymerizable prepolymer composition of the present disclosure, the content of the basic polymerization catalyst with respect to a total of 100 parts by mass of the two or more different optical material monomers is not particularly limited.

For example, the content of the basic polymerization catalyst with respect to a total of 100 parts by mass of the two or more different optical material monomers may be selected from a range of from 0.002 parts by mass to 4.0 parts by mass.

The content of the basic polymerization catalyst may be determined according to the type of the isocyanate compound contained in the polymerizable prepolymer composition. For example, the content of the basic polymerization

catalyst may be determined depending on whether or not the isocyanate compound has an aromatic ring.

When at least one of the two or more different optical material monomers is an isocyanate compound having an aromatic ring, the content of the basic polymerization catalyst contained in the polymerizable prepolymer composition is preferably from 0.002 parts by mass to 1 part by mass, with respect to a total of 100 parts by mass of the two or more different optical material monomers.

When the content of the basic polymerization catalyst used together with an isocyanate compound having an aromatic ring is 0.002 parts by mass or more, it is possible to promote the polymerization reaction in a favorable manner, and it is possible to obtain high-quality optical materials in a short period of time. In addition, by promoting the polymerization reaction in a favorable manner, it is possible to improve the releasability of the cured product when removing the same from the mold.

From this viewpoint, the content of the basic polymerization catalyst is preferably 0.010 parts by mass or more, more preferably 0.050 parts by mass or more, and even more preferably 0.070 parts by mass or more, with respect to a total of 100 parts by mass of the two or more different optical material monomers.

When the content of the basic polymerization catalyst used together with an isocyanate compound having an aromatic ring is 1 part by mass or less, for example, it is possible to improve the handling property of the polymerizable prepolymer composition when pouring the same into a mold.

From this viewpoint, the content of the basic polymerization catalyst is preferably 0.50 parts by mass or less, more preferably 0.15 parts by mass or less, and still more preferably 0.10 parts by mass or less, with respect to a total of 100 parts by mass of the two or more different optical material monomers.

When at least one of the two or more different optical material monomers is an isocyanate compound having no aromatic ring, the content of the basic polymerization catalyst contained in the polymerizable prepolymer composition is preferably from 0.1 parts by mass to 4.0 parts by mass, with respect to a total of 100 parts by mass of the two or more different optical material monomers.

When the content of the basic polymerization catalyst used together with an isocyanate compound having no aromatic ring is 0.1 parts by mass or more, it is possible to promote the polymerization reaction in a favorable manner, and it is possible to obtain high-quality optical materials in a short period of time. In addition, by promoting the polymerization reaction in a favorable manner, it is possible to improve the releasability of the cured product when removing the same from the mold.

From this viewpoint, the content of the polymerization catalyst is preferably 0.15 parts by mass or more, and more preferably 0.20 parts by mass or more, with respect to a total of 100 parts by mass of the two or more different optical-material monomers.

When the content of the basic polymerization catalyst used together with an isocyanate compound having no aromatic ring is 4.0 parts by mass or less, it is possible to improve the handling property of the polymerizable prepolymer composition when pouring the same into a mold.

From this viewpoint, the content of the basic polymerization catalyst is preferably 3.0 parts by mass or less, more preferably 2.0 parts by mass or less, and even more preferably 1.0 part by mass or less, with respect to a total of 100 parts by mass of the two or more different optical material monomers.

(Viscosity)

From the viewpoint of suppressing the formation of striae in the cured product, the polymerizable prepolymer composition preferably has a viscosity of 10 mPa·s or more, more preferably 40 mPa·s or more, still more preferably 70 mPa·s or more, further preferably 80 mPa·s or more, particularly preferably 100 mPa·s or more, and most preferably 120 mPa·s or more, as measured using a B-type viscometer at 25°C and 60 rpm.

The method for measuring the viscosity of the polymerizable prepolymer composition is the same as described above.

(Thickening Rate)

From the viewpoint of shortening the curing time of the polymerizable prepolymer composition, the slope of the thickening rate of the polymerizable prepolymer composition is preferably 0.005 or more, more preferably 0.007 or more, and still more preferably 0.01 or more.

From the viewpoint of improving the pot life of the polymerizable prepolymer composition, the slope of the thickening rate is preferably 0.04 or less, more preferably 0.035 or less, and still more preferably 0.03 or less.

The method for measuring the slope of the thickening rate of the polymerizable prepolymer composition is the same as described above.

(Thixotropic Ratio)

The polymerizable prepolymer composition preferably has a thixotropic ratio of 1.3 or less, more preferably 1.2 or less, and still more preferably 1.1 or less.

When the thixotropic ratio of the polymerizable prepolymer composition is 1.3 or less, it is possible to rapidly fill a container such as a mold with the polymerizable prepolymer composition, and it is possible to prevent the formation of striae or the like more effectively by suppressing the occurrence of thermal convection during polymerization. As a result, it is possible to maintain the favorable quality of the obtained optical materials.

The thixotropic ratio of the polymerizable prepolymer composition is preferably 0.9 or more, more preferably 0.95 or more, and still more preferably 1.0 or more. The method for measuring the thixotropic ratio is the same as described above.

From the viewpoint of handleability, the polymerizable prepolymer composition may preferably contain a prepolymer that contains an isocyanato group.

That is, it is preferable that the isocyanate groups possessed by the prepolymer are partly polymerized rather than totally polymerized, and it is preferably that at least 70% of the isocyanato groups of the isocyanate compound used in the production of the polymerizable prepolymer composition remain unpolymerized.

When the prepolymer contains isocyanato groups, i.e., the composition contains the isocyanate compound in a larger amount than the other optical material monomers that can polymerize with the isocyanate compound, the viscosity of the polymerizable prepolymer composition can be kept low even when the viscosity of the other optical material monomer(s) is high, thereby improving handleability.

In particular, from the viewpoint of handleability, the prepolymer preferably contains isocyanato groups when the other optical-material monomer(s) include at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate).

The polymerizable prepolymer composition may preferably be in a state in which the prepolymer contains substantially no isocyanato group.

In the present disclosure, the phrase "the prepolymer contains substantially no isocyanato group" refers to that almost all of the isocyanato groups are in a state of being polymerized.

Specifically, the expression "the prepolymer contains substantially no isocyanato group" refers to that the content of isocyanato groups in the prepolymer is at or below the detection limit when measured by IR spectroscopy.

When the prepolymer substantially contains no isocyanato group, it is possible to improve the stability of the polymerizable prepolymer composition because an isocyanato group, which is a highly reactive functional group, is substantially not present therein.

The polymerizable prepolymer composition preferably satisfies a condition in which the value obtained by subtracting the refractive index B of a prepolymer raw material composition from the refractive index A of the polymerizable prepolymer composition (also referred to as "refractive index A - refractive index B") is more than 0, more preferably 0.005 or more, and still more preferably 0.01 or more. The prepolymer raw material composition refers to a composition including two or more different optical material monomers and a polymerization catalyst, in which a prepolymer has not been formed.

The refractive index A refers to a refractive index of the polymerizable prepolymer composition obtained after polymerizing the optical material monomers and the polymerization catalyst to form a prepolymer, and the refractive index B refers to a refractive index of the prepolymer raw material composition before forming a prepolymer by polymerization of the optical material monomers and the polymerization catalyst.

When the value of refractive index A - refractive index B falls within the above-described range, the viscosity of the polymerizable prepolymer composition can be readily adjusted to a predetermined range. In addition, the quality of the cured product of the polymerizable prepolymer composition (such as refractive index and appearance) is readily stabilized.

The value of refractive index A - refractive index B may be 0.04 or less, and may be 0.03 or less.

When the prepolymer contains an isocyanate group, the value of refractive index A - refractive index B is preferably 0.005 or more, and more preferably 0.010 or more. In addition, the value of refractive index A - refractive index B is preferably 0.040 or less, and more preferably 0.030 or less.

When the prepolymer contains substantially no isocyanato group, the value of refractive index A - refractive index B is preferably 0.005 or more, and more preferably 0.010 or more. In addition, the value of refractive index A - refractive index B is preferably 0.035 or less, and more preferably 0.025 or less.

The polymerizable prepolymer composition preferably exhibits little change in viscosity over time (i.e., being stable in viscosity). The term the polymerizable prepolymer composition is stable in viscosity refers to that the polymerizable prepolymer composition exhibits a change in viscosity of 10% or less during storage at 20°C for 24 hours.

Examples of the polymerizable prepolymer composition that is stable in viscosity include a polymerizable prepolymer composition that does not contain a polymerizable functional group that readily reacts with the polymerizable

functional groups contained in the prepolymer.

<<Cured Product>>

The cured product of the present disclosure is a cured product of the polymerizable composition or the polymerizable prepolymer composition as described above.

The cured product of the present disclosure may contain an amine as a component derived from the polymerizable composition or the polymerizable prepolymer composition. For example, the cured product obtained from a polymerizable composition or a polymerizable prepolymer composition containing an amine-based catalyst as a basic polymerization catalyst may contain an amine. The content of the amine contained in the cured product is not particularly limited, and may be, for example, from more than 0 mass% to 1 mass%.

When the polymerizable composition or the polymerizable prepolymer composition contains an isocyanate compound having an aromatic ring as the optical material monomer and an amine-based catalyst as the basic polymerization catalyst, the amine content in the cured product is preferably 0.001% by mass or more, more preferably 0.005% by mass or more, and still more preferably 0.01% by mass or more, from the viewpoint of reducing the formation of striae in the cured product.

From the viewpoint of improving the handling properties of the polymerizable composition, the amine content in the cured product is preferably 0.50% by mass or less, more preferably 0.20% by mass or less, and still more preferably 0.10% by mass or less.

When the polymerizable composition or the polymerizable prepolymer composition contains an isocyanate compound not having an aromatic ring as the optical material monomer and an amine-based catalyst as the basic polymerization catalyst, the amine content in the cured product is preferably 0.03% by mass or more, more preferably 0.05% by mass or more, and still more preferably 0.07% by mass or more, from the viewpoint of reducing the formation of striae in the cured product.

From the viewpoint of improving the handling properties of the polymerizable composition, the amine content in the cured product is preferably 2.5% by mass or less, more preferably 2.0% by mass or less, and still more preferably 1.5% by mass or less.

In the present disclosure, the amine content in the cured product refers to the amount of amine measured by gas chromatography-mass spectrometry (GC-MS) from a dichloromethane composition obtained by dispersing the cured product in dichloromethane and subjecting the dispersion to ultrasonic extraction.

The method for measuring the amine content in the cured product is as follows.

Two hundred milligrams (200 mg) of the cured product pulverized into powder using a metal file and 3 mL of dichloromethane are placed in a centrifuge tube (capacity: 10 mL). Ultrasonic extraction is performed at room temperature for 10 minutes using an ultrasonic cleaner (manufactured by IUCHI Co., Ltd., US-4), followed by centrifugation at 4,000 rpm for 10 minutes using a centrifuge (manufactured by KUBOTA Corporation, Tabletop Centrifuge 2410).

The supernatant is collected, and the residue is again dispersed in 3 mL of dichloromethane, followed by the ultrasonic extraction and centrifugation as mentioned above, and the supernatant is collected (hereinafter also referred to as "residue extraction").

After repeating the residue extraction two additional times, dichloromethane is added to the collected supernatants so that the total volume becomes 10 mL.

The resulting 10 mL of supernatant is filtered and analyzed by gas chromatography-mass spectrometry (also referred to as GC-MS) using a GC-MS apparatus: Agilent Technologies, 6890 GC / 5973N MSD and a column: CP-Sil 8 CB for Amine (0.25 mm ID $\times$ 30 m, film thickness = 0.25 $\mu$m) to obtain a peak area value derived from amines. The amine content in the cured product is determined from the obtained peak area value derived from amines and a calibration curve of amine amount.

The amine described above refers to an amine compound contained in the polymerizable composition or the polymerizable prepolymer composition as, for example, a basic polymerization catalyst, an active hydrogen compound, or the like.

The cured product of the present disclosure may contain, as a component derived from the polymerizable composition or the polymerizable prepolymer composition, an organic acid having a pKa value of less than 4.

The content of the organic acid having a pKa value of less than 4 contained in the cured product is not particularly limited, and may be, for example, from more than 0% by mass to 1% by mass.

When the polymerizable composition or the polymerizable prepolymer composition contains, an isocyanate compound having an aromatic ring as the optical material monomer, from the viewpoints of improving the pot life of the polymerizable composition or the polymerizable prepolymer composition and reducing striae in the cured product, the content of the organic acid having a pKa value of less than 4 in the cured product is preferably 0.001% by mass or more, more preferably 0.005% by mass or more, and still more preferably 0.01% by mass or more.

From the viewpoint of shortening the curing time of the polymerizable composition, the content of the organic acid

having a pKa value of less than 4 in the cured product is preferably 1% by mass or less, more preferably 0.5% by mass or less, and still more preferably 0.1% by mass or less.

When the polymerizable composition or the polymerizable prepolymer composition contains an isocyanate compound having no aromatic ring as the optical material monomer, from the viewpoints of improving the pot life of the polymerizable composition or the polymerizable prepolymer composition and reducing striae in the cured product, the content of the organic acid having a pKa value of less than 4 in the cured product is preferably 0.01% by mass or more, more preferably 0.02% by mass or more, and still more preferably 0.03% by mass or more.

From the viewpoint of shortening the curing time of the polymerizable composition, the content of the organic acid having a pKa value of less than 4 in the cured product is preferably 5% by mass or less, more preferably 3% by mass or less, and still more preferably 1% by mass or less.

In the present disclosure, the content of the organic acid having a pKa value of less than 4 in the cured product is measured in the same manner as the content of the amine described above.

In a case of optical applications in which high light transmittance is particularly required, the degree of cloudiness of the cured product is preferably less than 50, and more preferably less than 35.

The degree of cloudiness of the cured product is measured by the following method.

The cured product is caused to transmit light from a light source (for example, Luminar Ace LA-150A manufactured by Hayashi-Repic Co., Ltd.) in a dark environment. An image of the light transmitted through the cured product is captured using an image processing apparatus (for example, an image processing apparatus manufactured by Ube Information Systems, Inc.), and grayscale processing is performed on the captured image. The grayscale intensity of the processed image is quantified for each pixel, and the average value of the grayscale intensity values of all pixels is defined as the degree of cloudiness.

The cured product preferably has no striae having a length of 1.0 mm or more within a region having a radius of 15 mm from the center of the cured product, and more preferably has no striae having a length of 1.0 mm or more both within and outside the region having a radius of 15 mm from the center of the cured product.

More specifically, the cured product may be a cured product of two or more different optical material monomers, wherein at least one of the two or more different optical material monomers is an isocyanate compound; no striae having a length of 1.0 mm or more within a region having a radius of 15 mm from the center of the cured product is present; the content of amine measured by gas chromatography-mass spectrometry is more than 0% by mass; and the content of an organic acid having a pKa value of less than 4 measured by gas chromatography-mass spectrometry is more than 0% by mass.

The content of amine measured by gas chromatography-mass spectrometry may be 1% by mass or less, and the content of the organic acid having a pKa value of less than 4 measured by gas chromatography-mass spectrometry may be 1% by mass or less.

Preferred ranges of the content of amine or the content of the organic acid having a pKa value of less than 4 contained in the cured product are as described above.

Details and preferred embodiments of the two or more different optical material monomers and the isocyanate compound having an aromatic ring are as described above.

In the cured product of the present disclosure, the two or more different optical material monomers may include an isocyanate compound having an aromatic ring and an isocyanate compound not having an aromatic ring.

When the two or more different optical material monomers include an isocyanate compound not having an aromatic ring and an isocyanate compound having an aromatic ring, from the viewpoint of controlling the polymerization reaction, the ratio of the isocyanate compound not having an aromatic ring to the isocyanate compound having an aromatic ring is preferably in the range of 3:7 to 0:10, and more preferably in the range of 2:8 to 0:10, in terms of the molar ratio of isocyanate groups.

<<Method for Producing Optical Material>>

The method for producing an optical material of the present disclosure includes the following Method A and Production Method A.

<Method A>

Method A includes:

a preparation process of preparing a polymerizable composition for an optical material that contains two or more different optical material monomers, a basic polymerization catalyst, and an organic acid having a pKa value of less than 4, wherein at least one of the two or more different optical material monomers is an isocyanate compound;
a casting process of adjusting the viscosity of the polymerizable composition measured with a B-type viscometer at

25°C and 60 rpm to 10 mPa·s to 1000 mPa·s, and casting the polymerizable composition for an optical material into a mold; and

a curing process of curing the polymerizable composition by polymerizing the two or more different optical material monomers in the polymerizable composition in the mold.

It is possible to maintain the quality of the obtained optical material and shorten the production time of the optical material according to Method A that includes the preparation process, the casting process, and the curing process.

Method A may include the preparation process, the casting process, and the curing process in this order.

In the polymerizable composition prepared in the preparation process, the content of the basic polymerization catalyst with respect to a total of 100 parts by mass of the two or more different optical material monomers is not particularly limited. For example, the content of the basic polymerization catalyst may be from 0.010 parts by mass to 2.0 parts by mass with respect to a total of 100 parts by mass of the two or more different optical material monomers.

The polymerizable composition in which the content of the basic polymerization catalyst is within the above range contains a larger amount of the basic polymerization catalyst as compared with the case of conventional methods for producing optical materials.

Accordingly, it is possible to generate the reaction heat (i.e., heat generated by self-heating) of the polymerizable composition in a short time when polymerizing the optical material monomers contained therein during the curing process.

By utilizing the reaction heat, it is possible to promote the polymerization reaction of the optical material monomers in the polymerizable composition, thereby obtaining high-quality optical materials in a shorter time as compared with conventional methods.

In conventional methods, the polymerization reaction is caused mainly by heating the polymerizable composition. In Method A, heating of the polymerizable composition is not necessarily required.

Further, since Method A utilizes self-heating of the polymerizable composition, it is possible to proceed with polymerization without excessive reliance on external heat supply. Therefore, in combination with increasing the viscosity of the polymerizable composition as described below, it is possible to suppress non-uniformity of heat and thermal convection in the polymerizable composition, whereby the formation of striae can be suppressed.

In the present disclosure, the term "striation (striae)" refers to a state in which the refractive index of a specific portion differs from the normal refractive index in the surrounding region. Formation of striae may also be described as a state that causes disadvantages in the intended use of the optical material. In a case of optical materials, striation is a type of defect.

The content of the basic polymerization catalyst contained in the polymerizable composition may be determined according to the type of isocyanate compound contained in the polymerizable composition. For example, the content of the basic polymerization catalyst may be determined depending on whether or not the isocyanate compound has an aromatic ring.

Preferred ranges of the content of the basic polymerization catalyst contained in the polymerizable composition are the same as the preferred ranges of the content of the basic polymerization catalyst contained in the polymerizable composition described above.

<Preparation Process>

Method A includes a preparation process of preparing a polymerizable composition that contains two or more different optical material monomers, a basic polymerization catalyst, and an organic acid having a pKa value of less than 4, wherein at least one of the two or more different optical material monomers is an isocyanate compound.

The preparation process may be a process of merely preparing a polymerizable composition that has been produced in advance, or may be a process of producing the polymerizable composition.

In the preparation process, the polymerizable composition is not particularly limited as long as it contains two or more different optical material monomers, a basic polymerization catalyst, and an organic acid having a pKa value of less than 4.

The polymerizable composition may be a commercially available product, or may be prepared by mixing at least two or more different optical material monomers, a basic polymerization catalyst, and an organic acid having a pKa value of less than 4. The mixing method is not particularly limited, and known methods can be applied.

The temperature at which the components of the polymerizable composition are mixed is not particularly limited, but is preferably 30°C or lower, and more preferably room temperature (25°C) or lower.

From the viewpoint of pot life of the polymerizable composition, the temperature is preferably lower than 25°C in some cases. When the solubility of an additive such as an internal mold release agent in the components is not sufficient, the components may be heated in advance to dissolve the additive therein.

When mixing the components described above, it is preferable to perform the mixing under a dry inert gas atmosphere in order to prevent moisture from entering the polymerizable composition.

The preparation process is preferably a process in which the polymerizable composition is produced by preliminarily mixing a basic polymerization catalyst and an organic acid having a pKa value of less than 4 with a part of the two or more different optical material monomers, and subsequently mixing with the remainder of the two or more different optical material monomers.

In that case, it is possible to avoid the occurrence of polymerization between the part of the two or more different optical material monomers and the remainder of the two or more different optical material monomers, until the time of blending a mixture containing a part of the two or more different optical material monomers, the basic polymerization catalyst and the organic acid having a pKa value of less than 4 with a mixture that does not contain the basic polymerization catalyst or the organic acid having a pKa value of less than 4 but contains the remainder of the two or more different optical material monomers.

Accordingly, by performing the preparation process in the foregoing order, the timing of initiation of polymerization can be controlled. Therefore, for example, it is possible to improve the handling properties of the polymerizable composition when pouring the same into a mold.

The mixing of the remainder of the two or more different optical material monomers with the mixture of the part of the two or more different optical material monomers, the basic polymerization catalyst and the organic acid having a pKa value of less than 4 may be carried out in a single operation or may be carried out in multiple operations.

Specific embodiments of the preparation process include, for example, an embodiment as described below.

First, a mixed solution was prepared from a part of the optical material monomers and an additive (for example, an internal mold release agent). The mixed solution is stirred at 25°C for 1 hour to completely dissolve the respective components, and a part of the remaining portion of the optical material monomers is added and stirred to obtain a homogeneous solution. The solution is degassed to obtain a first mixed solution.

Next, the remainder of the optical material monomers, the basic polymerization catalyst, and the organic acid having a pKa value of less than 4 are mixed and stirred at 25°C for 30 minutes to completely dissolve, thereby obtaining a second mixed solution.

Subsequently, the first mixed solution and the second mixed solution are mixed to obtain the polymerizable composition.

<Casting Process>

Method A includes a casting process of adjusting the viscosity of the polymerizable composition to from 10 mPa·s to 1000 mPa·s as measured with a B-type viscometer under the conditions of 25°C and 60 rpm, and casting the polymerizable composition into a mold.

By adjusting the viscosity of the polymerizable composition within the above range during the casting, formation of striae in the resulting optical material can be effectively suppressed.

From the above viewpoint, the viscosity of the polymerizable composition is preferably 10 mPa·s or more, more preferably 40 mPa·s or more, still more preferably 70 mPa·s or more, further preferably 80 mPa·s or more, particularly preferably 100 mPa·s or more, and even more preferably 120 mPa·s or more.

From the viewpoint of maintaining favorable handling properties when molding the optical material into a desired shape, the viscosity of the polymerizable composition is preferably 1000 mPa·s or less, more preferably 700 mPa·s or less, and still more preferably 400 mPa·s or less.

The method for adjusting the viscosity of the polymerizable composition is not particularly limited.

For example, the viscosity of the polymerizable composition may be adjusted by a method such as adding a high-viscosity compound, heating, stirring, or the like.

<Curing Process>

Method A includes a curing process of curing the polymerizable composition by polymerizing the two or more different optical material monomers contained in the polymerizable composition in the mold.

By including the curing process, Method A enables polymerization of the polymerizable composition and production of an optical material.

In conventional methods, polymerization is caused by heating the polymerizable composition. In contrast, in Method A, the polymerization reaction of the optical material monomers contained in the polymerizable composition can be promoted by increasing the reaction heat associated with the polymerization reaction (i.e., heat generated by self-heating).

That is, in the curing process of Method A, the polymerizable composition can be cured by allowing the polymerizable composition to stand.

Accordingly, in Method A, heating of the polymerizable composition is not necessarily required. However, the polymerizable composition may be heated in order to promote the polymerization reaction.

The environment in which the curing process is carried out is not particularly limited. While it is possible to cure the polymerizable composition by heating the same from outside the mold, the curing process is preferably a process of curing the polymerizable composition by allowing it to stand in a closed space, from the viewpoint of improving optical quality such as suppression of striae while causing the polymerization in a short time.
By allowing the polymerizable composition to stand in a closed space, it is possible to prevent heat generated by self-heating of the polymerizable composition from being released to the outside. As a result, the heat generated by self-heating can be retained within the closed space, thereby promoting the polymerization reaction more efficiently and producing optical materials in a shorter time.
Examples of the closed space include a thermally insulated environment.
A thermally insulated environment refers to an environment that retains heat inside and suppresses heat conduction between the inside and the outside. An environment in which heat conduction between the inside and the outside is suppressed refers to an environment in which, when the polymerizable composition is allowed to stand in the closed space, the thermal conductivity between the inside and the outside of the closed space is sufficient to cure the polymerizable composition.
The thermally insulated environment can be formed by, for example, using a heat insulating material.
That is, by allowing the polymerizable composition to stand in a heat-insulating container made of a heat insulating material, it is possible to retain heat inside the heat-insulating container and suppress heat conduction between the inside and the outside.
The thermal conductivity of the heat insulating material is preferably 0.50 W/m·K or less, more preferably 0.10 W/m·K or less, and still more preferably 0.05 W/m·K or less.
The density of the heat insulating material is preferably 10 kg/$m^3$ or more, more preferably 15 kg/$m^3$ or more, and still more preferably 20 kg/$m^3$ or more.
In the "thermal insulation" or the "thermally insulated environment" in Method A, it is preferable to heat the heat-insulating container in order to maintain the same in a constant-temperature state (constant-temperature reaction vessel) to such an extent that the heating does not inhibit the polymerization reaction due to reaction heat of the polymerizable composition, or does not excessively promote the polymerization reaction due to external heating.
In that case, it is possible to maintain the environment inside the reaction vessel to be in a heat-retaining state or in a constant-temperature state, in response to the temperature rise due to self-heating of the optical material monomers, or the like, thereby promoting the polymerization reaction more effectively.
The thermally insulated environment may be created by using, for example, an insulated reaction vessel or a constant-temperature reaction vessel as described above.
For example, when a mold filled with monomers is allowed to stand in a vacuum container serving as an insulated reaction vessel, the insulated polymerization under a thermally insulated environment using an insulated reaction vessel (constant-temperature reaction vessel) can be carried out by the following procedure.
The inner surface of the vacuum container is covered with a material having heat-insulation and heat-retention properties, such as urethane foam or cork, and a mold filled with monomers is wrapped with a member such as cloth as necessary. Then, the mold is allowed to stand in the vacuum container.
The curing process may be a process of curing the polymerizable composition by allowing the polymerizable composition to stand without heating the same from the outside.
As described above, in Method A, heating of the polymerizable composition is not necessarily required.
Heating the polymerizable composition from the outside may require the use of equipment, which may increase economic burden. According to Method A, it is possible to reduce the economic burden by producing optical materials by a simple method.
The curing process is preferably a process of curing the polymerizable composition by allowing the polymerizable composition to stand over from 2 hours to 10 hours.
In conventional methods, polymerization is generally carried out by gradually raising the temperature over several hours to several tens of hours (for example, about 20 hours to 48 hours).
If the polymerization time is insufficient, the polymerizable composition may not be fully cured, and it is not possible to obtain an optical material or maintain the quality thereof.
However, according to Method A, it is possible to produce optical materials in a short time while maintaining the quality thereof. Specifically, optical materials can be produced by allowing the polymerizable composition to stand over a time period of 10 hours or less.
From the above viewpoint, in the curing process, it is more preferable to allow the polymerizable composition to stand for 8 hours or less.
From the viewpoint of obtaining an optical material that is adequately cured through polymerization, it is preferable to allow the polymerizable composition to stand for 2 hours or more, and more preferably for 5 hours or more.
In the curing process, a microwave irradiation process of irradiating the polymerizable composition with microwaves for a predetermined time may be additionally provided as necessary.

One embodiment of the curing process includes the following Process a and Process b.

Process a: Pouring (casting) the polymerizable composition into a mold (into the cavity of the mold).

Process b: Allowing the mold supplied with the polymerizable composition to stand in a closed space for a predetermined period of time to cause thermally insulated polymerization.

(Process a)

First, the polymerizable composition is poured into a mold (casting mold) that is supported by a gasket, tape, or the like. As necessary, depending on the physical properties required for the resulting optical material, it is preferable to perform a defoaming treatment under reduced pressure, a filtration treatment under pressure or reduced pressure, or the like.

(Process b)

The polymerization conditions are not particularly limited, but are preferably appropriately adjusted depending on the composition of the polymerizable composition, the type and amount of catalyst used, the shape of the mold, and the like.

It may be possible to allow the mold supplied with the polymerizable composition to stand to cause polymerization in a thermally insulated environment over a time period of from 2 hours to 4 hours.

In Process b, as necessary, a heating process may be additionally provided after a thermally insulated polymerization process in which the mold supplied with the polymerizable composition is allowed to stand in a thermally insulated environment for a predetermined time.

In Process b, as necessary, it is possible to heat the mold supplied with the polymerizable composition in a continuous or intermittent manner at a temperature that does not exceed the temperature of self-heating of the polymerizable composition during the thermally insulated polymerization process; or it is possible to maintain the environment temperature inside the insulated reaction vessel by heating the same, in parallel with the process of allowing the mold supplied with the polymerizable composition to stand in a thermally insulated environment (thermally insulated polymerization).

<Annealing Process>

Method A may further include, as necessary, an annealing process of annealing the cured polymerizable composition.

The annealing is usually performed at a temperature of from 50°C to 150°C, preferably from 90°C to 140°C, and more preferably from 100°C to 130°C.

<Other Processes>

Method A may further include other processes as necessary.

Examples of such other processes include, for example, a pouring process of pouring the polymerizable composition into a mold, in the case of producing an optical material using a mold.

<Applications of Optical Material>

The optical material obtained by Method A can be used for plastic lenses, prisms, optical fibers, information recording substrates, filters, light-emitting diodes, and the like.

Among these, the optical material according to the embodiments of the present disclosure is suitably used for plastic lenses, and more suitably used for plastic lenses for eyeglasses.

<Method B>

Method B includes a preparation process of preparing two or more different optical material monomers and a basic polymerization catalyst, wherein at least one of the two or more different optical material monomers is an isocyanate compound;

a prepolymerization process of mixing a part of the two or more different optical material monomers with at least a part of the basic polymerization catalyst, and polymerizing at least a part of the optical material monomers to obtain a prepolymer, thereby obtaining a mixture containing the prepolymer; and

an acid addition process of adding an organic acid having a pKa value of less than 4 to the mixture containing the prepolymer.

It is possible to suppress the formation of striae in the obtained optical material and shorten the production time of the optical material according to Method B that includes the preparation process, the prepolymerization process, and the acid addition process.

In addition to the above processes, Method B preferably includes:

a polymerizable composition preparation process of obtaining a polymerizable composition containing the two or more different optical material monomers, the prepolymer, the basic polymerization catalyst, and the organic acid having a pKa value of less than 4, by adding at least the remainder of the two or more different optical material monomers to the mixture containing the prepolymer; and

a curing process of curing the two or more different optical material monomers in the polymerizable composition to obtain an optical material that is a cured product of the polymerizable composition.

When Method B further includes the polymerizable composition preparation process and the curing process, it is possible to suppress the formation of striae in the obtained optical material in a more favorable manner, and shorten the production time of the optical material in a more favorable manner.

In the preparation process, the content of the basic polymerization catalyst with respect to a total of 100 parts by mass of the two or more different optical material monomers is not particularly limited. For example, the content of the basic polymerization catalyst may be from 0.010 parts by mass to 2.0 parts by mass with respect to a total of 100 parts by mass of the two or more different optical material monomers.

A polymerizable composition containing the basic polymerization catalyst in the above range contains a larger amount of the basic polymerization catalyst as compared with the cases of conventional methods for producing optical materials.

Accordingly, as in the case of Method A, a high-quality optical material in which formation of striae is suppressed can be obtained in a shorter time than in conventional methods.

As in the case of Method A, heating of the polymerizable composition for optical materials is not necessarily required in Method B.

By including the preparation process, the prepolymerization process, the polymerizable composition preparation process, and the curing process, Method B can suppress the occurrence of convection inside the mold in which the polymerization reaction is caused, thereby suppressing the formation of striae in the obtained cured product.

In addition, by including the prepolymerization process, Method B can maintain storage stability of the mixture (for example, the polymerizable composition) in a more favorable manner than in a case in which prepolymerization is not performed.

For example, when a mixture containing the prepolymer is stored for a certain period of time, it is possible to suppress the occurrence of polymerization reaction in the mixture, that is, a longer pot life can be ensured.

Furthermore, by adding an organic acid having a pKa value of less than 4 to the mixture containing the prepolymer in the acid addition process, the activity of the basic polymerization catalyst is suppressed, thereby further improving the pot life of the polymerizable composition.

<Preparation Process>

Method B includes a preparation process of preparing two or more different optical material monomers and a basic polymerization catalyst.

In the preparation process, the content of the basic polymerization catalyst may be determined according to the type of isocyanate compound contained in the two or more different optical material monomers. For example, the content of the basic polymerization catalyst may be determined depending on whether or not the isocyanate compound has an aromatic ring.

When at least one of the two or more different optical material monomers is an isocyanate compound having an aromatic ring, the amount of the basic polymerization catalyst may be from 0.010 parts by mass to 0.50 parts by mass with respect to a total of 100 parts by mass of the two or more different optical material monomers.

By using 0.010 parts by mass or more of the basic polymerization catalyst with respect to 100 parts by mass of the two or more different optical material monomers, it is possible to promote the polymerization reaction in a favorable manner, thereby obtaining a high-quality optical material in which formation of striae is suppressed. In addition, by promoting the polymerization reaction in a favorable manner, it is possible to improve the releasability of the cured product when removing the same from the mold.

From the above viewpoint, the basic polymerization catalyst is preferably used in an amount of 0.015 parts by

mass or more, and more preferably 0.030 parts by mass or more, with respect to 100 parts by mass of the two or more different optical material monomers.

The above-described range of the content of the basic polymerization catalyst may be appropriately changed depending on the types of the optical material monomers and the basic polymerization catalyst.

For example, when the optical material monomers include m-xylylene diisocyanate (an isocyanate compound having an aromatic ring), 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane, and the basic polymerization catalyst includes 3,5-lutidine, the basic polymerization catalyst is preferably used in an amount of 0.015 parts by mass or more, and more preferably 0.020 parts by mass or more, with respect to 100 parts by mass of the two or more different optical material monomers.

For example, when the optical material monomers include m-xylylene diisocyanate and 4-mercaptomethyl-1,8-dimercapto-3,6-dithiaoctane, and the basic polymerization catalyst includes 3,5-lutidine, the basic polymerization catalyst is preferably used in an amount of 0.010 parts by mass or more, and more preferably 0.015 parts by mass or more, with respect to 100 parts by mass of the two or more different optical material monomers.

By using 0.50 parts by mass or less of the basic polymerization catalyst with respect to 100 parts by mass of the two or more different optical material monomers, for example, handling properties of the polymerization composition when pouring the same into a mold can be improved.

From this viewpoint, the amount of the basic polymerization catalyst is preferably 0.09 parts by mass or less, more preferably 0.07 parts by mass or less, and even more preferably 0.05 parts by mass or less, with respect to 100 parts by mass of the two or more different optical material monomers.

When at least one of the two or more different optical material monomers is an isocyanate compound having no aromatic ring, the amount of the basic polymerization catalyst may be more than 0.05 parts by mass to 2.0 parts by mass with respect to a total of 100 parts by mass of the two or more different optical material monomers.

By using more than 0.05 parts by mass of the basic polymerization catalyst with respect to 100 parts by mass of the two or more different optical material monomers, it is possible to promote the polymerization reaction in a favorably manner, thereby obtaining a high-quality optical material in which formation of striae is suppressed in a short time. In addition, it is possible to improve the releasability of the cured product when removing the same from the mold by promoting the polymerization reaction in a favorable manner.

From the above viewpoint, the amount of the basic polymerization catalyst is preferably 0.08 parts by mass or more, more preferably 0.10 parts by mass or more, still more preferably 0.13 parts by mass or more, and particularly preferably 0.17 parts by mass or more, with respect to 100 parts by mass of the two or more different optical material monomers.

The above-described range of the content of the basic polymerization catalyst may be appropriately changed depending on the types of the optical material monomers and the basic polymerization catalyst.

For example, when the optical material monomers include 2,5(6)-bis(isocyanatomethyl)bicyclo[2.2.1]heptane, pentaerythritol tetrakis(3-mercaptopropionate), and 4-mercaptomethyl-1,8-dimercapto-3,6-dithiaoctane, and the polymerization catalyst includes 3,5-lutidine, the content of the polymerization catalyst is preferably 0.10 parts by mass or more, and more preferably 0.17 parts by mass or more, with respect to 100 parts by mass of the two or more different optical material monomers.

By using 2.0 parts by mass or less of the basic polymerization catalyst with respect to 100 parts by mass of the two or more different optical material monomers, for example, it is possible to improve the handling properties of the polymerizable composition when pouring the same into a mold.

From this viewpoint, the amount of the basic polymerization catalyst is preferably 1.5 parts by mass or less with respect to 100 parts by mass of the two or more different optical material monomers.

Further, depending on the types of the optical material monomers and the basic polymerization catalyst, the content of the basic polymerization catalyst may be 1.0 part by mass or less, 0.3 parts by mass or less, or 0.15 parts by mass or less, with respect to 100 parts by mass of the two or more different optical material monomers.

The amount of the basic polymerization catalyst can be appropriately set depending on the type of the basic polymerization catalyst, the types and amounts of monomers used (such as isocyanate compounds, active hydrogen compounds, and other components), the desired shape of the molded article, and the like.

<Prepolymerization Process>

Method B includes a prepolymerization process in which a part of the two or more different optical material monomers and at least a part of the basic polymerization catalyst are mixed, and at least a part of the part of the two or more different optical material monomers is polymerized to obtain a prepolymer, thereby obtaining a mixture containing the prepolymer.

The present inventors considered that one of the causes of the formation of striae in the obtained cured product is

the occurrence of convection due to a non-uniform temperature distribution inside the mold in which a polymerization reaction is caused.

Accordingly, the present inventors have focused on increasing the viscosity of the polymerizable composition for optical materials by preliminarily polymerizing a part of the optical material monomers to produce a prepolymer and allowing the polymerizable composition to contain the prepolymer. In that way, it is possible to suppress the occurrence of convection inside the mold.

In addition, in Method B, it is less likely to create a temperature difference between the inside and the outer periphery of the mold by preventing self-generated heat from being released to the outside.

From the foregoing viewpoints, it is presumed that the formation of striae can be suppressed in Method B.

According to Method B, a prepolymer having excellent pot life can be obtained.

The mode of the "part of the two or more different optical material monomers" is not particularly limited.

For example, the "part of the two or more different optical material monomers" may be a part of each of the two or more different optical material monomers, respectively.

Alternatively, the "part of the two or more different optical material monomers" may be the entirety of one of the two or more different optical material monomers, or may be the entirety of two or more thereof.

The basic polymerization catalyst used in the prepolymerization process may be a part of, or the entirety of, the basic polymerization catalyst contained in the polymerizable composition.

When a part of the basic polymerization catalyst contained in the polymerizable composition is used in the prepolymerization process, the mode of the "part of the basic polymerization catalyst" is not particularly limited, similarly to the "part of the two or more different optical material monomers".

For example, the "part of the basic polymerization catalyst" may be a partial amount of the basic polymerization catalyst.

When a part of the basic polymerization catalyst is used, the part of the basic polymerization catalyst is preferably from 5 parts by mass to 80 parts by mass, more preferably from 10 parts by mass to 60 parts by mass, and still more preferably from 15 parts by mass to 50 parts by mass, out of 100 parts by mass of the basic polymerization catalyst, from the viewpoint of securing the pot life over a long time.

The part of the two or more different optical material monomers is preferably from 5 parts by mass to 95 parts by mass, more preferably from 20 parts by mass to 80 parts by mass, and still more preferably from 30 parts by mass to 70 parts by mass, out of 100 parts by mass of the two or more different optical material monomers, from the viewpoint of securing the pot life over a long time.

Specific examples of embodiments of the prepolymerization process are described below; however, the prepolymerization process in Method B is not limited to the following embodiments.

(Embodiment a)

The prepolymerization process of Embodiment a is a process in which a part of the two or more different optical material monomers and the entirety of the basic polymerization catalyst are mixed, and at least a part of the part of the two or more different optical material monomers is polymerized to obtain a prepolymer, thereby obtaining a mixture containing the prepolymer.

In Embodiment a, it is preferable that the part of the two or more different optical material monomers consists of the entirety of one kind of optical material monomer selected from the two or more different optical material monomers and a part of another kind of optical material monomer other than the one kind of optical material monomer.

(Embodiment b)

The prepolymerization process of Embodiment b is a process in which a part of the two or more different optical material monomers and a part of the basic polymerization catalyst are mixed, and at least a part of the part of the two or more different optical material monomers is polymerized to obtain a prepolymer, thereby obtaining a mixture containing the prepolymer.

When Method B includes the prepolymerization process of Embodiment b, a polymerizable composition production process described later is a process of adding at least the remainder of the two or more different optical material monomers and the remainder of the basic polymerization catalyst to the mixture containing the prepolymer, thereby obtaining a polymerizable composition containing the two or more different optical material monomers, the prepolymer, the basic polymerization catalyst, and the organic acid having a pKa of less than 4.

In Embodiment b, it is preferable that the two or more different optical material monomers include an isocyanate compound, the part of the two or more different optical material monomers includes a part of the isocyanate compound, and the remainder of the two or more different optical material monomers includes the remainder of the isocyanate compound.

<Acid Addition Process>

Method B includes an acid addition process of adding an organic acid having a pKa of less than 4 to the mixture containing the prepolymer.
The amount of the organic acid having a pKa of less than 4 added to the mixture containing the prepolymer is not particularly limited. For example, the content of the organic acid having a pKa of less than 4 may be from 0.001 parts by mass to 1 part by mass with respect to a total of 100 parts by mass of the two or more different optical material monomers serving as raw materials for the prepolymer.
When the content of the organic acid having a pKa of less than 4 is 0.001 parts by mass or more with respect to a total of 100 parts by mass of the two or more different optical material monomers, an increase in viscosity of the polymerizable composition is effectively suppressed.
From this viewpoint, the content of the organic acid having a pKa of less than 4 is preferably 0.005 parts by mass or more, and more preferably 0.01 parts by mass or more, with respect to a total of 100 parts by mass of the two or more different optical material monomers.
When the content of the organic acid having a pKa of less than 4 is 1 part by mass or less with respect to a total of 100 parts by mass of the two or more different optical material monomers, dissociation by heat of a salt formed between the organic acid and the basic polymerization catalyst is promoted in the curing process, and the activity of the basic polymerization catalyst is readily expressed. As a result, the polymerization reaction can proceed rapidly.
From this viewpoint, the content of the organic acid having a pKa of less than 4 is preferably 0.5 parts by mass or less, and more preferably 0.1 parts by mass or less, with respect to a total of 100 parts by mass of the two or more different optical material monomers.
The molar ratio (X/Y) of the organic acid having a pKa of less than 4 (X) to the basic polymerization catalyst (Y) is preferably from 0.1 to 2.0, more preferably from 0.15 to 1.25, and still more preferably from 0.2 to 1.2.
From the viewpoint of causing the basic polymerization catalyst to express its activity in a more favorable manner, the molar number of functional groups of the organic acid having a pKa of less than 4 (x) in the mixture containing the prepolymer is preferably smaller than the molar number of functional groups of the basic polymerization catalyst (y). In other words, the molar ratio represented by x/y is preferably less than 1.0.

<Viscosity Adjustment Process>

Method B preferably further includes, after the prepolymerization process and before the polymerizable composition preparation process, a viscosity adjustment process of adjusting the viscosity of the mixture containing the prepolymer to from 30 mPa·s to 2000 mPa·s.
When the viscosity of the mixture containing the prepolymer falls within the above range, the viscosity of the polymerizable composition prepared in the polymerizable composition preparation process can be adjusted to an appropriate range from the viewpoint of suppressing the formation of striae in the obtained optical material. As a result, it is possible to suppress the formation of striae in the obtained optical material.
From the above viewpoint, the viscosity of the mixture containing the prepolymer is preferably from 40 mPa·s to 2000 mPa·s, and more preferably from 50 mPa·s to 1800 mPa·s.
The foregoing viscosity is measured using a B-type viscometer under conditions of 25°C and 60 rpm (revolutions per minute).
The method for adjusting the viscosity of the mixture containing the prepolymer is not particularly limited.
For example, the viscosity of the mixture containing the prepolymer may be adjusted by way of adding a high-viscosity compound, heating, stirring, or the like.
The temperature at which the mixture containing the prepolymer is prepared is not particularly limited, as long as the prepolymer can be obtained through a polymerization reaction at that temperature. For example, the temperature may be from 20°C to 50°C, or from 25°C to 45°C.
The time for stirring when preparing the mixture containing the prepolymer is not particularly limited, as long as the prepolymer can be obtained through a polymerization reaction at that time. For example, the time for stirring may be from 30 minutes to 5 hours, or from 1 hour to 5 hours.
The method for preparing the mixture containing the prepolymer may be a method in which the mixture containing the prepolymer is prepared while adjusting the viscosity by stirring under conditions of 40°C for 3 hours.

<Polymerizable Composition Preparation Process>

Method B includes a polymerizable composition preparation process of adding at least the remainder of the two or more different optical material monomers to the mixture containing the prepolymer, thereby obtaining a polymerizable composition containing the two or more different optical material monomers, the prepolymer, the basic polymerization

catalyst, and the organic acid having a pKa value of less than 4.

The polymerizable composition preparation process is a process of obtaining a polymerizable composition for optical materials containing the two or more different optical material monomers, the prepolymer, the basic polymerization catalyst, and the organic acid having a pKa value of less than 4, by adding at least the remainder of the two or more different optical material monomers to the mixture containing the prepolymer.

By performing the polymerizable composition preparation process, it is possible to avoid the occurrence of polymerization between the prepolymer and the remainder of the two or more different optical material monomers until the time of mixing the mixture containing the prepolymer and the remainder of the two or more different optical material monomers.

Accordingly, by carrying out the polymerizable composition preparation process at an appropriate timing, for example, it is possible to improve the handling properties of the polymerizable composition when pouring the same into a mold.

In the polymerizable composition preparation process, when at least the remainder of the two or more different optical material monomers is added to the mixture containing the prepolymer, the addition may be carried out in a single step or may be carried out in multiple steps.

Herein, the term "remainder of the two or more different optical material monomers" refers to the part other than the "part of the two or more different optical material monomers" used in the prepolymerization process.

The remainder of the two or more different optical material monomers may be optical material monomers having functional groups capable of polymerizing with polymerizable functional groups possessed by the prepolymer, and the amount of such functional groups may be an amount substantially capable of polymerizing with all of the polymerizable functional groups possessed by the prepolymer (i.e., an equivalent amount).

From the viewpoint of enhancing the optical uniformity of the polymerizable composition, the remainder of the two or more different optical material monomers preferably includes monomers of the same kind as the optical material monomers constituting the prepolymer.

The temperature at which the components are mixed is not particularly limited, but is preferably 30°C or lower, and more preferably room temperature (25°C) or lower.

The temperature at which the components are mixed is preferably lower than 25°C in some cases. However, when an additive such as an internal release agent has insufficient solubility, the components may be heated prior to dissolving the additive in the components.

Specific embodiments of the polymerizable composition preparation process include, for example, the following embodiments.

First, the organic acid having a pKa value of less than 4 and other additives (for example, an internal release agent) are added to the mixture containing the prepolymer to prepare a mixed solution. The mixed solution is stirred at 25°C for 1 hour to completely dissolve the components, followed by degassing, whereby a first mixed solution is obtained.

Separately, a second mixed solution is prepared from the remainder of the optical material monomers and, if necessary, the remainder of the basic polymerization catalyst, by stirring at 25°C for 30 minutes to completely dissolve the components.

Thereafter, the first mixed solution and the second mixed solution are mixed, stirred, and degassed to obtain a polymerizable composition.

<Liquid Feeding Process>

Method B may further include, after the polymerizable composition preparation process and before the curing process, a liquid feeding process of feeding the polymerizable composition to a casting mold for molding.

The liquid feeding process may be a process of feeding the polymerizable composition to the casting mold while remixing the polymerizable composition in a static mixer.

The liquid feeding process may be a process of feeding the polymerizable composition to the casting mold while remixing the polymerizable composition using a dynamic mixer. By feeding the polymerizable composition while remixing, it is possible to overcome the non-uniformity in the distribution of the polymerizable composition during feeding to the mold. As a result, formation of striae in the obtained cured product can be suppressed.

<Curing Process>

Method B includes a curing process of curing the two or more different optical material monomers in the polymerizable composition to obtain an optical material that is a cured product of the polymerizable composition.

Specific embodiments and preferred embodiments of the curing process in Method B are the same as the specific embodiments and preferred embodiments described in the foregoing curing process of Method A.

<Second Prepolymerization Process>

In addition to the foregoing processes, Method B may further include:

a second prepolymerization process of mixing the remainder of the two or more different optical material monomers and the remainder of the basic polymerization catalyst, and polymerizing at least a part of the remainder of the two or more different optical material monomers to obtain a second prepolymer, thereby obtaining a mixture containing the second prepolymer;

a polymerizable composition preparation process of adding the mixture containing the second prepolymer to the mixture containing the prepolymer obtained by the prepolymerization process, thereby obtaining a polymerizable composition containing the prepolymer, the second prepolymer, the basic polymerization catalyst, and the organic acid having a pKa value of less than 4; and

a curing process of curing the prepolymer and the second prepolymer in the polymerizable composition to obtain an optical material that is a cured product of the polymerizable composition.

When Method B includes the foregoing processes, it is possible to obtain a mixture containing the prepolymer obtained by the prepolymerization process and a mixture containing the second prepolymer obtained by the second prepolymerization process.

As a result, the viscosities of the mixture containing the prepolymer and the mixture containing the second prepolymer can be brought closer to each other, thereby enabling easier mixing of the two mixtures.

In the second prepolymerization process, specific embodiments and preferred embodiments of the two or more different optical material monomers and the basic polymerization catalyst are the same as the specific embodiments and preferred embodiments of the two or more different optical material monomers and the basic polymerization catalyst described in the foregoing prepolymerization process.

When Method B includes the second prepolymerization process, in the polymerizable composition preparation process, the mixture containing the second prepolymer is added to the mixture containing the prepolymer obtained by the prepolymerization process, thereby obtaining a polymerizable composition containing the prepolymer, the second prepolymer, the basic polymerization catalyst, and the organic acid having a pKa value of less than 4.

Specific embodiments and preferred embodiments of the mixture containing the prepolymer in the polymerizable composition preparation process are the same as the specific embodiments and preferred embodiments described in the foregoing polymerizable composition preparation process.

When Method B includes the second prepolymerization process, the curing process is a process of curing the prepolymer and the second prepolymer in the polymerizable composition to obtain an optical material that is a cured product of the polymerizable composition.

In the curing process, specific embodiments and preferred embodiments of the prepolymer are the same as the specific embodiments and preferred embodiments of the prepolymer described in the foregoing curing process.

<Annealing Process>

Method B may include, as necessary, an annealing process of annealing the cured polymerizable composition.

Specific embodiments and preferred embodiments of the annealing process in Method B are the same as the specific embodiments and preferred embodiments of the annealing process in Method A.

<Other Processes>

Method B may include other processes as necessary.

Specific embodiments and preferred embodiments of the other processes in Method B are the same as the specific embodiments and preferred embodiments of the other processes in Method A.

<Use of Optical Material>

Specific embodiments and preferred embodiments of the use of the optical material obtained by Method B are the same as the specific embodiments and preferred embodiments of the use of the optical material in Method A.

[Examples]

Examples of the present disclosure are described below; however, the present disclosure is not limited to the following Examples. Unless otherwise specified, "parts" are based on mass.

[Example 1-1]

A mixture was obtained by mixing 1.50 parts by mass of Tinuvin 329 (manufactured by BASF SE) (ultraviolet absorber) and 43.80 parts by mass of m-xylylene diisocyanate (optical material monomer a1) and stirring at 25°C for 1 hour to completely dissolve the components. To this mixture was added 10.56 parts by mass of 4-mercaptomethyl-1,8-dimercapto-3,6-dithiaoctane (optical material monomer b1), followed by stirring at 25°C for 5 minutes to obtain a homogeneous solution. To the homogeneous solution was added 0.028 parts by mass of 3,5-lutidine (basic polymerizable catalyst, pKa = 6.15) was added, and the optical material monomers were allowed to polymerize by stirring at 40°C for 1 hour, thereby obtaining a mixture containing a prepolymer.

A mixture was prepared by mixing 3.00 parts by mass of m-xylylene diisocyanate (optical material monomer a1), 0.1 parts by mass of JP-506H (manufactured by Johoku Chemical Industry Co., Ltd.) (release agent) and 0.029 parts by mass of (±)-10-camphorsulfonic acid (organic acid, pKa = 1.17). The mixture was mixed with the mixture including a prepolymer prepared in the foregoing process, followed by degassing at 400 Pa and 25°C for 1 hour, thereby obtaining Mixture 1 containing a prepolymer.

The viscosity and refractive index of Mixture 1 containing a prepolymer are shown in Table 1.

A homogenous solution was prepared by mixing 5.20 parts by mass of m-xylylene diisocyanate (optical material monomer a1) and 37.44 parts by mass of 4-mercaptomethyl-1,8-dimercapto-3,6-dithiaoctane (optical material monomer b1) and stirring the mixture at 25°C for 5 minutes. To the homogeneous solution was added 0.01 parts by mass of 3,5-lutidine (basic polymerizable catalyst, pKa = 6.15), and the optical material monomers were allowed to polymerize by stirring at 40°C for 1 hour. Thereafter, the mixture was degassed at 400 Pa and 25°C for 1 hour, thereby obtaining Mixture 2 containing a prepolymer.

The viscosity of Mixture 2 containing a prepolymer is shown in Table 1.

A polymerizable composition was obtained by mixing Mixture 1 containing a prepolymer and Mixture 2 containing a prepolymer at 20°C. The obtained polymerizable composition was supplied to a casting mold while being remixed in a static mixer.

The viscosity of the polymerizable composition during casting (also referred to as the casting viscosity) was adjusted to the value shown in Table 1.

While filtering through a 1-μm PTFE filter, the polymerizable composition was injected at a rate of 10 g/s into a cavity of a mold for lens fabrication composed of a 78 mm-diameter 4-curve glass mold (upper mold) and a 78 mm-diameter 4-curve glass mold (lower mold).

The mold into which the polymerizable composition had been injected was placed in a polymerization oven, and the temperature was increased from 20°C to 120°C over 10 hours. A molded article in which the polymerizable composition had been cured was removed from the mold, and was further subjected to annealing at 120°C for 2 hours, thereby obtaining a molded article (lens).

[Example 1-2]

A molded article (lens) was obtained in the same manner as in Example 1-1, except that the method for preparing Mixture 1 containing a prepolymer was modified as described below.

A mixture was obtained by mixing 1.50 parts by mass of Tinuvin 329 manufactured by BASF SE (ultraviolet absorber) and 46.80 parts by mass of m-xylylene diisocyanate (optical material monomer a1) and stirring at 25°C for 1 hour until the components were completely dissolved. A homogenous solution was obtained by adding 10.56 parts by mass of 4-mercaptomethyl-1,8-dimercapto-3,6-dithiaoctane (optical material monomer b1) to the mixture and stirring at 25°C for 5 minutes. To the obtained homogeneous solution was added 0.028 parts by mass of 3,5-lutidine (basic polymerization catalyst), and the optical material monomers were allowed to polymerize by stirring at 40°C for 1 hour, thereby obtaining a mixture containing a prepolymer.

To the mixture containing a prepolymer were added 0.1 parts by mass of JP-506H manufactured by Johoku Chemical Co., Ltd. (release agent) and 0.007 parts by mass of methanesulfonic acid (organic acid, pKa = -2.6), followed by degassing at 400 Pa and 25°C for 1 hour, thereby obtaining Mixture 1 containing a prepolymer.

The viscosity and refractive index of Mixture 1 containing a prepolymer are shown in Table 1.

[Example 1-3]

A molded article (lens) was obtained in the same manner as in Example 1-1, except that the basic polymerization catalyst was changed from 3,5-lutidine to 2,6-lutidine (basic polymerization catalyst, pKa = 6.6), and that the amount of the organic acid was changed to 0.025 parts by mass.

[Example 1-4]

A molded article (lens) was obtained in the same manner as in Example 1-1, except that Mixture 1 containing a prepolymer and Mixture 2 containing a prepolymer were changed to those described in Table 1.

Specifically, the optical material monomer used in the preparation of Mixture 1 containing a prepolymer and Mixture 2 containing a prepolymer was changed from 4-mercaptomethyl-1,8-dimercapto-3,6-dithiaoctane (optical material monomer b1) to a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane (optical material monomer b2), and the amounts of the respective components were changed to the amounts shown in Table 1.

[Example 1-5]

A molded article (lens) was obtained in the same manner as in Example 1-2, except that Mixture 1 containing a prepolymer and Mixture 2 containing a prepolymer were changed to those shown in Table 1.

Specifically, the optical material monomer used in the preparation of Mixture 1 containing a prepolymer and Mixture 2 containing a prepolymer was changed from 4-mercaptomethyl-1,8-dimercapto-3,6-dithiaoctane (optical material monomer b1) to a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane (optical material monomer b2), and the amounts of the respective components were changed to the amounts shown in Table 1.

[Comparative Example 1-1]

A molded article (lens) was obtained in the same manner as in Example 1-1, except that (±)-10-camphorsulfonic acid was not used in the preparation of Mixture 1 containing a prepolymer.

[Comparative Example 1-2]

A molded article (lens) was obtained in the same manner as in Example 1-1, except that octanoic acid (organic acid, pKa = 4.90) was used instead of (±)-10-camphorsulfonic acid in the preparation of Mixture 1 containing a prepolymer.

[Comparative Example 1-3]

A molded article (lens) was obtained in the same manner as in Example 1-3, except that (±)-10-camphorsulfonic acid was not used in the preparation of Mixture 1 containing a prepolymer.

[Comparative Example 1-4]

A molded article (lens) was obtained in the same manner as in Example 1-3, except that octanoic acid was used instead of (±)-10-camphorsulfonic acid in the preparation of Mixture 1 containing a prepolymer.

[Example 2-1]

A mixture was prepared by mixing 0.10 parts by mass of an internal release agent for MR manufactured by Mitsui Chemicals, Inc. (internal release agent), 1.5 parts by mass of Tinuvin 329 manufactured by BASF SE (ultraviolet absorber), and 43.07 parts by mass of a mixture of 2,5-bis(isocyanatomethyl)-bicyclo-[2.2.1]-heptane and 2,6-bis(isocyanatomethyl)-bicyclo-[2.2.1]-heptane (optical material monomer a1), followed by stirring at 25°C for 1 hour to completely dissolve the components. To the mixture were added 3.47 parts by mass of pentaerythritol tetrakis(3-mercaptopropionate) (optical material monomer b2) and 3.70 parts by mass of 4-mercaptomethyl-1,8-dimercapto-3,6-dithiaoctane (optical material monomer b1), followed by stirring at 25°C for 5 minutes, thereby obtaining a homogeneous solution. To the homogeneous solution was added 0.13 parts by mass of 3,5-lutidine (basic polymerization catalyst, pKa = 6.15), and the optical material monomers were allowed to polymerize by stirring at 40°C for 3 hours, thereby obtaining a mixture containing a prepolymer.

A mixed solution was prepared by mixing 5.00 parts by mass of a mixture of 2,5-bis(isocyanatomethyl)-bicyclo-[2.2.1]-heptane and 2,6-bis(isocyanatomethyl)-bicyclo-[2.2.1]-heptane (optical material monomer a1), and 0.165 parts by mass of (±)-10-camphorsulfonic acid (organic acid, pKa = 1.17). The mixed solution was mixed with the mixture containing a prepolymer prepared in the foregoing process, followed by degassing at 400 Pa and 25°C for 1 hour, thereby obtaining Mixture 1 containing a prepolymer.

The viscosity and refractive index of Mixture 1 containing a prepolymer are shown in Table 1.

A homogenous solution was prepared by mixing 2.53 parts by mass of a mixture of 2,5-bis(isocyanatomethyl)-bicyclo-[2.2.1]-heptane and 2,6-bis(isocyanatomethyl)-bicyclo-[2.2.1]-heptane (optical material monomer a1), 20.43 parts by mass of pentaerythritol tetrakis(3-mercaptopropionate) (optical material monomer b2), and 21.80 parts by mass of 4-mercaptomethyl-1,8-dimercapto-3,6-dithiaoctane (optical material monomer b1), followed by stirring at 25°C for 5 minutes. To the homogeneous solution was added 0.02 parts by mass of 3,5-lutidine (basic polymerization catalyst, pKa = 6.15), and the optical material monomers were allowed to polymerize by stirring at 40°C for 3 hours. Thereafter, the homogenous solution was degassed at 400 Pa and 25°C for 1 hour, thereby obtaining Mixture 2 containing a prepolymer.
The viscosity and refractive index of Mixture 2 containing a prepolymer are shown in Table 1.
A polymerizable composition was obtained by mixing Mixture 1 containing a prepolymer and Mixture 2 containing a prepolymer at 20°C. The obtained polymerizable composition was supplied to a casting mold while being remixed in a static mixer.
The viscosity of the polymerizable composition during casting (also referred to as the casting viscosity) was adjusted to the value shown in Table 1.
While filtering through a 1-μm PTFE filter, the polymerizable composition was injected at a rate of 10 g/s into a cavity of a mold for lens fabrication composed of a 78 mm-diameter 4-curve glass mold (upper mold) and a 78 mm-diameter 4-curve glass mold (lower mold).
The mold into which the polymerizable composition had been injected was placed in a polymerization oven, and the temperature was increased from 20°C to 120°C over 10 hours. A molded article in which the polymerizable composition had been cured was removed from the mold, and was further subjected to annealing at 120°C for 2 hours, thereby obtaining a molded article (lens).

[Example 2-2]

A molded article (lens) was obtained in the same manner as in Example 2-1, except that the method for preparing Mixture 1 including a prepolymer was modified as described below.
A mixture was prepared by mixing 0.1 parts by mass of an internal release agent for MR manufactured by Mitsui Chemicals, Inc. (internal release agent), 1.5 parts by mass of Tinuvin 329 manufactured by BASF SE (ultraviolet absorber), and 48.07 parts by mass of a mixture of 2,5-bis(isocyanatomethyl)-bicyclo-[2.2.1]-heptane and 2,6-bis(isocyanatomethyl)-bicyclo-[2.2.1]-heptane (optical material monomer a1), followed by stirring at 25°C for 1 hour to completely dissolve the components. To the mixture were added 3.47 parts by mass of pentaerythritol tetrakis(3-mercaptopropionate) (optical material monomer b2) and 3.70 parts by mass of 4-mercaptomethyl-1,8-dimercapto-3,6-dithiaoctane (optical material monomer b1), followed by stirring at 25°C for 5 minutes, thereby obtaining a homogeneous solution. To the homogeneous solution was added 0.13 parts by mass of 3,5-lutidine (basic polymerization catalyst), and the optical material monomers were allowed to polymerize by stirring at 40°C for 3 hours, thereby obtaining a mixture containing a prepolymer.
The mixture containing a prepolymer was mixed with 0.06 parts by mass of methanesulfonic acid (organic acid, pKa = -2.6), followed by degassing at 400 Pa and 25°C for 1 hour, thereby obtaining Mixture 1 containing a prepolymer.
The viscosity and refractive index of Mixture 2 containing a prepolymer are shown in Table 1.

[Comparative Example 2-1]

A molded article (lens) was obtained in the same manner as in Example 2-1, except that (±)-10-camphorsulfonic acid was not used in the preparation of Mixture 1 containing a prepolymer.

[Comparative Example 2-2]

A molded article (lens) was obtained in the same manner as in Example 2-1, except that octanoic acid (organic acid, pKa = 4.90) was used instead of (±)-10-camphorsulfonic acid in the preparation of Mixture 1 containing a prepolymer.

[Evaluation]

The following evaluations were conducted on the polymerizable compositions and molded articles obtained in the Examples and Comparative Examples. The results are shown in Tables 1 and 2.

(Viscosity of Mixture Containing Prepolymer)

The mixture containing a prepolymer was stirred under conditions of 25°C and 60 rpm, and the viscosity was measured using a B-type viscometer (spindle No. 2; Brookfield).

(Refractive Index of Mixture Containing Prepolymer)

The refractive index of the mixture containing a prepolymer was measured at 20°C using a refractometer (RA-600; Kyoto Electronics Manufacturing Co., Ltd.).

(Viscosity of Polymerizable Composition)

The polymerizable composition was stirred under conditions of 25°C and 60 rpm, and the viscosity was measured using a B-type viscometer (spindle No. 2; Brookfield).

(Slope of Thickening Rate)

The slope of the thickening rate of the polymerizable composition was defined as the value of b in the following equation, which was used to approximate the results of plotting the time-dependent change in viscosity with the horizontal axis (= X) representing the time (hr) and the vertical axis (= Y) representing the viscosity of the polymerizable composition (mPa·s). The viscosity of the polymerizable composition was measured under conditions of 25°C and 30 rpm using a B-type viscometer (spindle No. 2; Brookfield).

$$Y=a*\exp(b*X)$$

A smaller value of the slope of the thickening rate indicates a slower increase in viscosity and superior pot life.

(Pot Life)

The state of the polymerizable composition 30 minutes after mixing Mixture 1 containing a prepolymer and Mixture 2 containing a prepolymer was evaluated according to the following criteria.

A: Casting is still possible after 30 minutes from mixing
B: Viscosity increases after 30 minutes from mixing, and casting is not possible

(Striae)

A projected image of the molded article was obtained using an ultra-high-pressure mercury lamp (light source model OPM-252HEG, manufactured by Ushio Inc.), and the projected image was visually observed and evaluated according to the following criteria.

A: No striae were observed. Specifically, no striae having a length of 1.0 mm or more were visually observed either within or outside a radius of 15 mm from the center of the molded article.
B: Striae were observed, but were generally acceptable as a product. Specifically, striae having a length of 1.0 mm or more were visually observed outside a radius of 15 mm from the center of the molded article; however, no striae having a length of 1.0 mm or more were visually observed within a radius of 15 mm from the center, and the molded article was generally acceptable as a product.
C: Striae were observed and were unacceptable as a product. Specifically, striae having a length of 1.0 mm or more were visually observed both within and outside a radius of 15 mm from the center of the molded article.

Table 1

| | | Examples | | | | | Comparative Examples | | | |
|---|---|---|---|---|---|---|---|---|---|---|
| | | 1-1 | 1-2 | 1-3 | 1-4 | 1-5 | 1-1 | 1-2 | 1-3 | 1-4 |
| Type of Basic Polymerization Catalyst | | 3,5-Lutidine | 3,5-Lutidine | 2,6-Lutidine | 3,5-Lutidine | 3,5-Lutidine | 3,5-Luti-dine | 3,5-Luti-dine | 3,5-Luti-dine | 3,5-Luti-dine |
| Type of Organic Acid | | 10-Camphor sulfonic Acid | Methane sulfonic Acid | 10-Camphor sulfonic Acid | 10-Camphor sulfonic Acid | Methane sulfonic Acid | - | Octanoic Acid | - | Octanoic Acid |
| pKa of Organic Acid | | 1.17 | -2.6 | 1.17 | 1.17 | -2.6 | - | 4.90 | - | 4.90 |
| Mixture 1 | Basic Polymerization Catalyst [parts by mass] | 0.028 | 0.028 | 0.028 | 0.028 | 0.028 | 0.028 | 0.028 | 0.028 | 0.028 |
| | Monomer a1 [parts by mass] | 46.80 | 46.80 | 46.80 | 48.93 | 48.93 | 46.80 | 46.80 | 48.93 | 48.93 |
| | Monomer b1 [parts by mass] | 10.56 | 10.56 | 10.56 | - | - | 10.56 | 10.56 | - | - |
| | Monomer b2 [parts by mass] | - | - | - | 10.35 | 10.35 | - | - | 10.35 | 10.35 |
| | Organic Acid [parts by mass] | 0.029 | 0.007 | 0.025 | 0.033 | 0.01 | - | 0.051 | - | 0.051 |
| | Release Agent [parts by mass] | 0.1 | 0.1 | 0.1 | 0.1 | 0.1 | 0.1 | 0.1 | 0.1 | 0.1 |
| | Reaction Time [h] | 1 | 1 | 1 | 1 | 1 | 1 | 1 | 1 | 1 |
| | Viscosity [mPa·s], 25°C | 415 | 415 | 415 | 440 | 440 | 415 | 415 | 440 | 440 |
| | Refractive Index | 1.5882 | 1.5882 | 1.5882 | 1.5866 | 1.5866 | 1.5882 | 1.5882 | 1.5866 | 1.5866 |
| Mixture 2 | Basic Polymerization Catalyst [parts by mass] | 0.010 | 0.010 | 0.010 | 0.010 | 0.010 | 0.010 | 0.010 | 0.010 | 0.010 |
| | Monomer a1 [parts by mass] | 5.20 | 5.20 | 5.20 | 1.77 | 1.77 | 5.20 | 5.20 | 1.77 | 1.77 |
| | Monomer b1 [parts by mass] | 37.44 | 37.44 | 37.44 | - | - | 37.44 | 37.44 | - | - |
| | Monomer b2 [parts by mass] | - | - | - | 38.95 | 38.95 | - | - | 38.95 | 38.95 |
| | Reaction Time [h] | 1 | 1 | 1 | 1 | 1 | 1 | 1 | 1 | 1 |
| | Viscosity [mPa·s], 25°C | 455 | 455 | 455 | 580 | 580 | 455 | 455 | 580 | 580 |
| | Refractive Index | 1.6401 | 1.6401 | 1.6401 | 1.6498 | 1.6498 | 1.6401 | 1.6401 | 1.6498 | 1.6498 |
| Casting Viscosity [mPa·s], 25°C | | 396 | 380 | 392 | 376 | 342 | 476 | 452 | 440 | 409 |
| Viscosity after 30 minutes [mPa·s], 25°C | | 527 | 887 | 506 | 498 | 544 | 1485 | 3670 | 2760 | 2457 |
| Slope of Thickening Rate | | 0.01162 | 0.03449 | 0.01050 | 0.01148 | 0.01854 | 0.04639 | 0.08341 | 0.07349 | 0.07163 |

(continued)

| | | Examples | | | | | Comparative Examples | | | |
|---|---|---|---|---|---|---|---|---|---|---|
| | | 1-1 | 1-2 | 1-3 | 1-4 | 1-5 | 1-1 | 1-2 | 1-3 | 1-4 |
| Polymerization Time [h] | | 10 | 10 | 10 | 10 | 10 | 10 | 10 | 10 | 10 |
| Pot Life | | A | A | A | A | A | B | B | B | B |
| Striae | 4C Plano 2 mm Thick | A | A | A | A | A | A | A | A | A |
| | 4C Plano 10 mm Thick | A | A | A | A | A | A | A | A | A |

Table 2

| | | Examples | | Comparative Examples | |
|---|---|---|---|---|---|
| | | 2-1 | 2-2 | 2-1 | 2-2 |
| Type of Organic Acid | | 10-Camphorsulfonic Acid | Methanesulfonic Acid | - | Octanoic Acid |
| pKa of Organic Acid | | 1.17 | -2.6 | - | 4.90 |
| Mixture 1 | Basic Polymerization Catalyst [parts by mass] | 0.13 | 0.13 | 0.13 | 0.13 |
| | Monomer a1 [parts by mass] | 48.07 | -48.07 | 48.07 | 48.07 |
| | Monomer b1 [parts by mass] | 3.70 | 3.70 | 3.70 | 3.70 |
| | Monomer b2 [parts by mass] | 3.47 | 3.47 | 3.47 | 3.47 |
| | Organic Acid [parts by mass] | 0.165 | 0.06 | - | 0.20 |
| | UV Absorber [parts by mass] | 1.5 | 1.5 | 1.5 | 1.5 |
| | Release Agent [parts by mass] | 0.1 | 0.1 | 0.1 | 0.1 |
| | Reaction Time [h] | 3 | 3 | 3 | 3 |
| | Viscosity [mPa·s], 25°C | 420 | 420 | 420 | 420 |
| | Refractive Index | 1.5271 | 1.5271 | 1.5271 | 1.5271 |
| Mixture 2 | Basic Polymerization Catalyst [parts by mass] | 0.02 | 0.02 | 0.02 | 0.02 |
| | Monomer a1 [parts by mass] | 2.53 | 2.53 | 2.53 | 2.53 |
| | Monomer b1 [parts by mass] | 21.80 | 21.80 | 21.80 | 21.80 |
| | Monomer b2 [parts by mass] | 20.43 | 20.43 | 20.43 | 20.43 |
| | Reaction Time [h] | 3 | 3 | 3 | 3 |
| | Viscosity [mPa·s], 25°C | 356 | 356 | 356 | 356 |
| | Refractive Index | 1.5846 | 1.5846 | 1.5846 | 1.5846 |
| Casting Viscosity [mPa·s], 25°C | | 315 | 312 | 343 | 345 |
| Viscosity after 30 minutes [mPa·s], 25°C | | 465 | 460 | 1332 | 1437 |
| Slope of Thicknening Rate | | 0.01634 | 0.01797 | 0.05436 | 0.05574 |
| Polymerization Time [h] | | 10 | 10 | 10 | 10 |
| Pot Life | | A | A | B | B |
| Striae | 4C Plano 2 mm Thick | A | A | A | A |
| | 4C Plano 10 mm Thick | A | A | A | A |

As shown in Tables 1 and 2, the polymerizable compositions of the Examples in which an organic acid having a pKa value of less than 4 was used together with a basic polymerization catalyst exhibited suppressed increases in viscosity and excellent pot life, as compared with the polymerizable compositions of the Comparative Examples in which no organic acid was used or an organic acid having a pKa value of 4 or more was used. In addition, no striae were observed in the molded articles (cured products) obtained using the polymerizable compositions of the Examples.

The disclosures of Japanese Patent Application Nos. 2023-135607 and 2023-135613 are incorporated herein by reference in their entirety.

All documents, patent applications, and technical standards cited in this specification are incorporated herein by reference to the same extent as if each individual document, patent application, or technical standard were specifically and

individually indicated to be incorporated by reference.

## Claims

1. A polymerizable composition for an optical material, the composition comprising two or more different monomers for an optical material, a basic polymerization catalyst, and an organic acid having a pKa value of less than 4, at least one of the two or more different monomers for an optical material being an isocyanate compound, and
the composition having a viscosity of from 10 mPa·s to 1000 mPa·s as measured at 25°C and 60 rpm using a B-type viscometer.

2. The polymerizable composition for an optical material according to claim 1, wherein:

    at least one of the two or more different monomers for an optical material is an isocyanate compound having an aromatic ring, and
    a content of the basic polymerization catalyst is from 0.010 parts by mass to 0.50 parts by mass with respect to a total of 100 parts by mass of the two or more different monomers for an optical material.

3. The polymerizable composition for an optical material according to claim 1, wherein:

    at least one of the two or more different monomers for an optical material is an isocyanate compound having no aromatic ring, and
    a content of the basic polymerization catalyst is from more than 0.05 parts by mass to 2.0 parts by mass with respect to a total of 100 parts by mass of the two or more different monomers for an optical material.

4. The polymerizable composition for an optical material according to claim 1, further comprising a prepolymer that is a polymer of the two or more different monomers for an optical material and that has a polymerizable functional group.

5. The polymerizable composition for an optical material according to claim 1, wherein the two or more different monomers for an optical material further include at least one active hydrogen compound selected from the group consisting of a polythiol compound having at least two mercapto groups, a hydroxythiol compound having at least one mercapto group and at least one hydroxy group, a polyol compound having at least two hydroxy groups, and an amine compound.

6. The polymerizable composition for an optical material according to claim 1, wherein at least one of the two or more different monomers for an optical material is an active hydrogen compound, and a total proportion of the isocyanate compound and the active hydrogen compound with respect to an entirety of the two or more different monomers for an optical material exceeds 70% by mass.

7. The polymerizable composition for an optical material according to claim 1, wherein a molar number of functional groups of the organic acid having a pKa value of less than 4 is smaller than a molar number of functional groups of the basic polymerization catalyst.

8. The polymerizable composition for an optical material according to claim 1, wherein the basic polymerization catalyst includes a basic polymerization catalyst having a pKa value of from 4 to 8.

9. A polymerizable prepolymer composition for an optical material, the composition comprising a prepolymer that is a polymer of two or more different monomers for an optical material and that has a polymerizable functional group, a basic polymerization catalyst, and an organic acid having a pKa value of less than 4, at least one of the two or more different monomers for an optical material being an isocyanate compound, and
the composition having a viscosity of from 10 mPa·s to 2000 mPa·s as measured at 25°C and 60 rpm using a B-type viscometer.

10. The polymerizable prepolymer composition for an optical material according to claim 9, wherein:

    at least one of the two or more different monomers for an optical material is an isocyanate compound having an aromatic ring, and
    a content of the basic polymerization catalyst is from 0.002 parts by mass to 1 part by mass with respect to a total of

100 parts by mass of the prepolymer.

**11.** The polymerizable prepolymer composition for an optical material according to claim 9, wherein:

at least one of the two or more different monomers for an optical material is an isocyanate compound having no aromatic ring, and
a content of the basic polymerization catalyst is from 0.1 parts by mass to 4.0 parts by mass with respect to a total of 100 parts by mass of the prepolymer.

**12.** A cured product of the polymerizable composition for an optical material according to claim 1 or of the polymerizable prepolymer composition for an optical material according to claim 9.

**13.** A method for producing an optical material, the method comprising:

a preparation process of preparing a polymerizable composition for an optical material comprising two or more different monomers for optical materials, a basic polymerization catalyst, and an organic acid having a pKa value of less than 4, at least one of the two or more different monomers for an optical material being an isocyanate compound;
a casting process of adjusting a viscosity of the polymerizable composition for an optical material to from 10 mPa·s to 1000 mPa·s as measured at 25°C and 60 rpm using a B-type viscometer, and casting the polymerizable composition for an optical material into a mold; and
a curing process of curing the polymerizable composition for an optical material by polymerizing the two or more different monomers for an optical material in the mold.

**14.** The method for producing an optical material according to claim 13, wherein:

at least one of the two or more different monomers for an optical material is an isocyanate compound having an aromatic ring, and
a content of the basic polymerization catalyst is from 0.010 parts by mass to 0.50 parts by mass with respect to a total of 100 parts by mass of the two or more different monomers for optical materials.

**15.** The method for producing an optical material according to claim 13, wherein:

at least one of the two or more different monomers for an optical material is an isocyanate compound having no aromatic ring, and
a content of the basic polymerization catalyst is from more than 0.05 parts by mass to 2.0 parts by mass with respect to a total of 100 parts by mass of the two or more different monomers for an optical material.

**16.** A method for producing an optical material, the method comprising:

a preparation process of preparing two or more different monomers for an optical material and a basic polymerization catalyst, at least one of the two or more different monomers for an optical material being an isocyanate compound;
a prepolymerization process of obtaining a prepolymer by mixing a part of the two or more different monomers for an optical material with at least a part of the basic polymerization catalyst, and at least partly polymerizing the part of the two or more different monomers for an optical material, thereby obtaining a mixture containing the prepolymer; and
an acid addition process of adding an organic acid having a pKa value of less than 4 to the mixture containing the prepolymer.

**17.** The method for producing an optical material according to claim 16, wherein:

at least one of the two or more different monomers for an optical material is an isocyanate compound having an aromatic ring,
a total amount of the two or more different monomers for an optical material is 100 parts by mass, and an amount of the basic polymerization catalyst is from 0.010 parts by mass to 0.50 parts by mass.

**18.** The method for producing an optical material according to claim 16, wherein:

at least one of the two or more different monomers for an optical material is an isocyanate compound having no aromatic ring,
a total amount of the two or more different monomers for an optical material is 100 parts by mass, and an amount of the basic polymerization catalyst is from more than 0.05 parts by mass to 2.0 parts by mass.

**19.** The method for producing an optical material according to claim 16, further comprising:

a polymerizable composition production process of obtaining a polymerizable composition for an optical material containing the two or more different monomers for an optical material, the prepolymer, the basic polymerization catalyst, and the organic acid having a pKa value of less than 4, by adding at least a remainder of the two or more different monomers for an optical material to the mixture containing the prepolymer; and
a curing process of curing the two or more different monomers for an optical material in the polymerizable composition to obtain an optical material that is a cured product of the polymerizable composition.

**20.** A cured product of two or more different monomers for an optical material, at least one of the two or more different monomers for an optical material being an isocyanate compound, the cured product having no striation with a length of 1.0 mm or more within a radius of 15 mm from the center of the cured product, and
the cured product having a content of amine measured by gas chromatography-mass spectrometry of more than 0% by mass, and a content of an organic acid having a pKa value of less than 4 measured by gas chromatography-mass spectrometry of more than 0% by mass.

**21.** The cured product according to claim 20, wherein:

at least one of the two or more different monomers for an optical material is an isocyanate compound having an aromatic ring, and
the content of amine is from 0.001% by mass to 0.50% by mass, and the content of the organic acid having a pKa value of less than 4 is from 0.001% by mass to 1% by mass.

**22.** The cured product according to claim 20, wherein:

at least one of the two or more different monomers for an optical material is an isocyanate compound having no aromatic ring, and
the content of amine is from 0.03% by mass to 2.5% by mass, and the content of the organic acid having a pKa value of less than 4 is from 0.01% by mass to 5% by mass.

## INTERNATIONAL SEARCH REPORT

International application No.
**PCT/JP2024/029690**

### A. CLASSIFICATION OF SUBJECT MATTER

***C08G 18/16***(2006.01)i; ***C08G 18/10***(2006.01)i; ***C08G 18/38***(2006.01)i; ***C08G 18/73***(2006.01)i; ***C08G 18/75***(2006.01)i; ***C08G 18/76***(2006.01)i; ***G02B 1/04***(2006.01)i
FI: C08G18/16; C08G18/76; C08G18/38 076; G02B1/04; C08G18/75; C08G18/73; C08G18/10

According to International Patent Classification (IPC) or to both national classification and IPC

### B. FIELDS SEARCHED

Minimum documentation searched (classification system followed by classification symbols)

C08G18/16; C08G18/10; C08G18/38; C08G18/73; C08G18/75; C08G18/76; G02B1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-74957 A (MITSUI CHEMICALS, INC.) 03 April 2008 (2008-04-03) claims, paragraphs [0002], [0070], [0096]-[0107] | 20-22 |
| Y | | 1-6, 9, 12-15, 20-22 |
| A | | 7-8, 10-11, 16-19 |
| Y | WO 2021/153632 A1 (MITSUI CHEMICALS, INC.) 05 August 2021 (2021-08-05) claims, paragraphs [0072]-[0073] | 1-6, 9, 12-15, 20-22 |
| A | | 7-8, 10-11, 16-19 |
| Y | WO 2021/153631 A1 (MITSUI CHEMICALS, INC.) 05 August 2021 (2021-08-05) claims, paragraphs [0068], [0069] | 1-6, 9, 12-15, 20-22 |
| A | | 7-8, 10-11, 16-19 |
| A | JP 2023-62742 A (POLYPLASTICS CO., LTD.) 09 May 2023 (2023-05-09) paragraph [0033] | 1-22 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/029690**

**C. DOCUMENTS CONSIDERED TO BE RELEVANT**

| Category* | Citation of document, with indication, where appropriate, of the relevant passages | Relevant to claim No. |
|---|---|---|
| A | JP 2011-530637 A (AKZO NOBEL COATINGS INTERNATIONAL B.V.) 22 December 2011 (2011-12-22)<br>paragraph [0073] | 1-22 |
| A | WO 2019/123968 A1 (DIC CORPORATION) 27 June 2019 (2019-06-27)<br>entire text | 1-22 |

Form PCT/ISA/210 (second sheet) (July 2022)

**INTERNATIONAL SEARCH REPORT**
**Information on patent family members**

International application No.
**PCT/JP2024/029690**

| Patent document cited in search report | Publication date (day/month/year) | Patent family member(s) | Publication date (day/month/year) |
|---|---|---|---|
| JP 2008-74957 A | 03 April 2008 | (Family: none) | |
| WO 2021/153632 A1 | 05 August 2021 | US 2022/0041789 A1 claims, paragraphs [0184]-[0189] | |
| | | US 2023/0051738 A1 | |
| | | US 2022/0041788 A1 | |
| | | US 2023/0048290 A1 | |
| | | US 2023/0111506 A1 | |
| | | WO 2021/153631 A1 | |
| | | WO 2021/182526 A1 | |
| | | WO 2022/113955 A1 | |
| | | EP 3919967 A1 | |
| | | EP 3916470 A1 | |
| | | EP 4101876 A1 | |
| | | EP 4332140 A2 | |
| | | KR 10-2021-0116710 A | |
| | | CN 113557256 A | |
| | | KR 10-2022-0138004 A | |
| | | CN 116874733 A | |
| | | CN 116874734 A | |
| | | CN 116891563 A | |
| | | CN 113557254 A | |
| | | KR 10-2021-0121258 A | |
| | | CN 115244106 A | |
| | | CN 115286758 A | |
| | | KR 10-2022-0137932 A | |
| | | KR 10-2022-0138005 A | |
| | | CN 116178653 A | |
| | | CN 116178654 A | |
| | | CN 116529048 A | |
| WO 2021/153631 A1 | 05 August 2021 | US 2022/0041788 A1 claims, paragraphs [0143]-[0148] | |
| | | US 2023/0048290 A1 | |
| | | US 2022/0041789 A1 | |
| | | US 2023/0051738 A1 | |
| | | US 2023/0111506 A1 | |
| | | WO 2021/153632 A1 | |
| | | WO 2021/182526 A1 | |
| | | WO 2022/113955 A1 | |
| | | EP 3916470 A1 | |
| | | EP 4332140 A2 | |
| | | EP 3919967 A1 | |
| | | EP 4101876 A1 | |
| | | CN 113557254 A | |
| | | KR 10-2021-0121258 A | |
| | | CN 115286758 A | |
| | | KR 10-2022-0138005 A | |
| | | CN 116178653 A | |
| | | CN 116178654 A | |
| | | KR 10-2021-0116710 A | |

Form PCT/ISA/210 (patent family annex) (July 2022)

**INTERNATIONAL SEARCH REPORT**
**Information on patent family members**

International application No.
**PCT/JP2024/029690**

| Patent document cited in search report | Publication date (day/month/year) | Patent family member(s) | Publication date (day/month/year) |
|---|---|---|---|
| | | CN 113557256 A | |
| | | CN 115244106 A | |
| | | KR 10-2022-0137932 A | |
| | | KR 10-2022-0138004 A | |
| | | CN 116874733 A | |
| | | CN 116874734 A | |
| | | CN 116891563 A | |
| | | CN 116529048 A | |
| JP 2023-62742 A | 09 May 2023 | (Family: none) | |
| JP 2011-530637 A | 22 December 2011 | US 2011/0144217 A1 | |
| | | paragraph [0071] | |
| | | WO 2010/018144 A1 | |
| | | CA 2733501 A1 | |
| | | CN 102119192 A | |
| | | KR 10-2011-0057156 A | |
| WO 2019/123968 A1 | 27 June 2019 | US 2021/0040363 A1 | |
| | | entire text | |
| | | KR 10-2020-0085351 A | |
| | | CN 111491970 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014027427 A
- WO 2014133111 A
- WO 2011055540 A
- WO 2016125736 A
- WO 2014027665 A
- WO 2020256057 A
- JP 2023135607 A
- JP 2023135613 A

### Non-patent literature cited in the description

- *The Journal of Physical Chemistry*, 1964, vol. 68 (6), 1560
- Chemical Handbook. Maruzen Co., Ltd., 25 June 1984